(19) Europäisches Patentamt
European Patent Office
Office européen des brevets

(11) **EP 3 786 815 A1**

(12) **EUROPEAN PATENT APPLICATION**

(43) Date of publication:
**03.03.2021 Bulletin 2021/09**

(51) Int Cl.:
**G06F 17/11** (2006.01)  **G06N 5/00** (2006.01)
**G06Q 10/04** (2012.01)

(21) Application number: **20178190.3**

(22) Date of filing: **04.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2019 JP 2019153418**

(71) Applicant: **FUJITSU LIMITED**
**Kanagawa 211-8588 (JP)**

(72) Inventor: **OSHIMA, Hirotaka**
**Kawasaki-shi, Kanagawa 211-8588 (JP)**

(74) Representative: **Haseltine Lake Kempner LLP**
**138 Cheapside**
**London EC2V 6BJ (GB)**

(54) **COMBINATORIAL OPTIMIZATION APPARATUS, COMBINATORIAL OPTIMIZATION METHOD, AND COMBINATORIAL OPTIMIZATION PROGRAM**

(57) A combination optimization apparatus includes: a storage unit that stores values of a plurality of state variables included in a first energy function given with a term representing a constraint condition for the plurality of state variables; and a processing unit that performs a search for the values of the plurality of state variables which minimize a value of the first energy function, wherein the search performed by the processing unit includes a first search performed by using the first energy function, a second search performed by using a second energy function obtained by removing the term representing the constraint condition from the first energy function after the first search, and a third search performed by using the first energy function after the second search.

FIG. 1

**Description**

FIELD

The embodiments discussed herein are related to a combination optimization apparatus, a combination optimization method, and a combination optimization program.

BACKGROUND

A combination optimization problem exists in various fields in modern society. For example, a combination of elements for minimizing costs is searched in fields such as manufacturing, distribution and marketing. However, calculation time of the combination optimization problem exponentially increases as the number of variables corresponding to the elements increases, and thus the combination optimization problem is known as a problem which is difficult to be solved in a von Neumann computer.

As a method of solving the combination optimization problem of many variables in which the von Neumann computer is not skilled, there is a method of performing calculation by replacing the combination optimization problem of a calculation target with an Ising model that is a model representing a behavior of a spin of a magnetic substance.

There is a case where the combination optimization problem includes a constraint condition. For example, a method is considered in which the combination optimization problem is represented by an energy function defined by a sum of a cost term representing an optimum condition and a constraint term representing the constraint condition, and is solved using a stochastic search method such as simulated annealing method.

Related art is disclosed in Japanese Laid-open Patent Publication No. 05-120252 and Japanese Laid-open Patent Publication No. 2004-110831.

SUMMARY

In a case where an energy function includes a constraint term, constraint violation is formulated to increase energy, and thus transition to an adjacent state is delayed due to an energy barrier.

It is desirable to provide a combination optimization apparatus, a combination optimization method, and a combination optimization program, which solve a state in which the transition to the adjacent state is delayed due to the energy barrier.

According to an embodiment of one aspect of the invention, a combination optimization apparatus is provided. The combination optimization apparatus includes a storage unit and a processing unit. The storage unit stores values of a plurality of state variables included in a first energy function given with a term representing a constraint condition for the plurality of state variables. The processing unit performs a search for values of the plurality of state variables, which minimize a value of the first energy function. The search performed by the processing unit includes a first search performed by using the first energy function, a second search performed by using a second energy function obtained by removing the term representing the constraint condition from the first energy function after the first search, and a third search performed by using the first energy function after the second search.

According to an embodiment of one aspect of the invention, a combination optimization method is provided.

In addition, according to an embodiment of one aspect of the invention, a combination optimization program is provided.

According to an embodiment of one aspect of the invention, it may be possible to solve a state in which transition to an adjacent state is delayed due to an energy barrier.

BRIEF DESCRIPTION OF DRAWINGS

The invention is described, by way of example only, with reference to the following drawings, in which:

FIG. 1 is a diagram illustrating an example of a combination optimization apparatus according to a first embodiment.
FIG. 2 is a diagram illustrating a hardware example of a combination optimization apparatus according to a second embodiment.
FIG. 3 is a diagram illustrating an example of an energy function.
FIG. 4 is a diagram illustrating an example of formulation of a problem.
FIG. 5 is a diagram illustrating an example (continuation) of the formulation of the problem.
FIG. 6 is a diagram illustrating a functional example of the combination optimization apparatus.
FIG. 7 is a diagram illustrating an example of erasing a term representing a constraint condition.
FIG. 8 is a flowchart illustrating an example of a search.

FIG. 9 is a diagram illustrating an example of the search.

FIG. 10 is a diagram illustrating an example of energy of a solution.

FIG. 11 is a diagram illustrating an example of erasing a term representing a constraint condition according to a third embodiment.

FIG. 12 is a diagram illustrating an example of the search.

FIG. 13 is a flowchart illustrating an example of a search according to a fourth embodiment.

FIG. 14 is a diagram illustrating an example of a combination optimization system according to a fifth embodiment.

FIG. 15 is a diagram illustrating a circuit configuration example of the combination optimization apparatus.

FIG. 16 is a diagram illustrating a circuit configuration example of a search circuit.

DESCRIPTION OF EMBODIMENTS

Hereinafter, embodiments will be described with reference to the accompanying drawings.

[First Embodiment]

A first embodiment will be described.

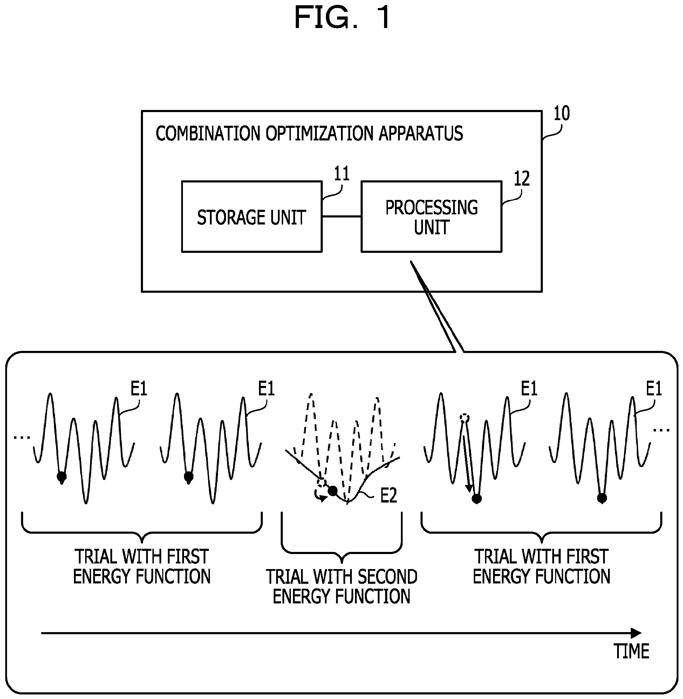

FIG. 1 is a diagram illustrating an example of a combination optimization apparatus according to a first embodiment.

A combination optimization apparatus 10 searches a combination of respective values of a plurality of state variables corresponding to a plurality of spins included in an Ising model of performing conversion on a problem of a calculation target for a value of each state variable in a case where the energy function becomes a minimum value. The value of each state variable in the case where the energy function becomes the minimum value corresponds to a ground state. The state variable may be also referred to as a "binary variable", a "spin bit", or, simply, a "bit". In a case where it is desired to obtain a state that maximizes a certain effect, a sign of the energy function may be changed.

Here, a state represented by the plurality of state variables is represented by "x" without a suffix. An Ising-type energy function $E(x)$ is defined by, for example, the following Equation (1).

[Math. 1]

$$E(x) = -\sum_{i,j} W_{ij} x_i x_j - \sum_i b_i x_i \qquad (1)$$

There is a case where quadratic unconstraint binary optimization represented in Equation (1) is referred to as QUBO. In addition, there is a case where a quadric format is referred to as a QUBO format.

A first term on a right side of Equation (1) is obtained by integrating a product of values of two state variables and a coupling coefficient without omission and duplication for all combinations of two state variables that are selectable from all state variables. $x_i$ is an i-th state variable. $x_j$ is a j-th state variable. A coupling coefficient $W_{ij}$ indicates a strength (or a weight) of coupling between the i-th state variable and the j-th state variable. For a matrix $W = \{W_{ij}\}$, there are many cases where $W_{ij} = W_{ji}$ and $W_{ii} = 0$. A suffix i added to the variable, such as the state variable $x_i$, is identification information of the variable and is referred to as an index.

A second term on the right side of Equation (1) is a sum of products of respective bias values of all the state variables and values of the state variables. $b_i$ indicates a bias value for an i-th state variable.

For example, "-1" of a spin in the Ising model corresponds to a value "0" of the state variable. "+1" of the spin in the Ising model corresponds to a value "1" of the state variable.

In a case where a value of the state variable $x_i$ changes to become $1-x_i$, an increase amount of the state variable $x_i$ is represented as $\delta x_i = (1 - x_i) - x_i = 1 - 2x_i$. Therefore, an energy change $\Delta E_i$ accompanying spin inversion of the state variable $x_i$ for the energy function $E(x)$ is represented by Equation (2).

[Math. 2]

$$\Delta E_i = E(\boldsymbol{x})\Big|_{x_i \to 1-x_i} - E(\boldsymbol{x})$$

$$= -\delta x_i \left( \sum_j W_{ij} x_j + b_i \right)$$

$$= -\delta x_i h_i \qquad (2)$$

$$= \begin{cases} -h_i & for \ x_i = 0 \to 1 \\ +h_i & for \ x_i = 1 \to 0 \end{cases}$$

$h_i$ is referred to as a local field and is represented by Equation (3).
[Math. 3]

$$h_i = \sum_j W_{ij} x_j + b_i \qquad (3)$$

A change amount $\delta h_i^{(j)}$ of the local field $h_i$, in a case where the state variable $x_j$ is changed, is represented by Equation (4).
[Math. 4]

$$\delta h_i^{(j)} = \begin{cases} +W_{ij} & for \ x_j = 0 \to 1 \\ -W_{ij} & for \ x_j = 1 \to 0 \end{cases} \qquad (4)$$

The combination optimization apparatus 10 holds the local field $h_i$ and adds the change amount $\delta h_i^{(j)}$ to $h_i$ in a case where the value of the state variable $x_j$ changes, thereby obtaining $h_i$ corresponding to a state after the bit inversion.

In the combination optimization apparatus 10, a Metropolis method or a Gibbs method is used to determine whether or not to allow a state transition (change in a value of the state variable $x_i$) in which the energy change becomes $\Delta E_i$ in the search of the ground state. That is, in a neighborhood search for searching for transition from a certain state to another state whose energy is lower than the certain state, the combination optimization apparatus 10 stochastically allows not only transition to a state where energy is lowered but also transition to a state where the energy is increased. For example, a probability A that accepts a change in a value of a state variable of the energy change $\Delta E$ is represented by Equation (5).
[Math. 5]

$$A(\Delta E) = \begin{cases} \min\left[1, \exp(-\beta \cdot \Delta E)\right] & Metropolis \\ 1/\left[1 + \exp\left(\beta \cdot \Delta E\right)\right] & Gibbs \end{cases} \qquad (5)$$

Here, an inverse temperature $\beta$ is a reciprocal ($\beta = 1/T$) of a temperature T. An operator min indicates to take a minimum value among factors. Therefore, in a case where the Metropolis method is used and the energy change $\Delta E$ satisfies Equation (6) for a uniform random number u ($0 < u \leq 1$), the change in the value of the state variable is allowed.
[Math. 6]

$$\ln(u) \times T \leq -\Delta E \qquad (6)$$

The combination optimization apparatus 10 changes the value of any of the state variable whose change is allowed. The combination optimization apparatus 10 obtains a solution for the combination optimization problem by repeatedly executing a trial to change the value of the state variable at each temperature while lowering the temperature T from an initial temperature to the lowest temperature by a stochastic search method such as simulated annealing. There is a case where the value of the state variable is not changed in one trial.

There is a case where the energy function is formulated by the sum of a cost term and a constraint term in the combination optimization problem. The cost term represents a condition of an optimization target. The constraint term represents a constraint condition. There is a case where the constraint term is referred to as a penalty term. As an example, the energy function E(x) = cost term D(x) + constraint term C(x) in a traveling salesman problem is taken into consideration. A moving distance of one salesman is minimized. The cost term D(x) represents the moving distance of the salesman. The constraint term C(x) represents a constraint that one salesman exists in only one city at one point in time or a constraint of passing a certain city only once. It is possible to formulate each of the cost term D(x) and the constraint term C(x) using a quadratic expression of the state variable. The energy function E(x) = D(x) + C(x) is represented in the QUBO format of Equation (1).

The combination optimization apparatus 10 searches for a state that minimizes the energy function E including the constraint term C. The combination optimization apparatus 10 includes a storage unit 11 and a processing unit 12.

The storage unit 11 is, for example, a volatile storage device such as a register or a random-access memory (RAM). The processing unit 12 is, for example, a processor such as a central processing unit (CPU) that executes a program. The processor may include a set (multiprocessor) of a plurality of processors. The processing unit 12 may be a dedicated electronic circuit such as an application-specific integrated circuit (ASIC) or a field-programmable gate array (FPGA) in which an operation is performed through a wired logic.

The storage unit 11 stores values of a plurality of state variables included in a first energy function to which terms representing constraint conditions for the plurality of state variables are given. It may be considered that the term representing the constraint condition is the constraint term C(x) itself. Alternatively, the constraint term C(x) may include a plurality of terms indicating constraints between the state variables. Therefore, it may be considered that the term representing the constraint condition is a term representing a constraint for another state variable of a certain state variable included in, for example, the constraint term C(x).

The processing unit 12 performs a search for values of the plurality of state variables that minimize the value of the first energy function. In a process of the search, the processing unit 12 temporarily changes the energy function used for the search from the first energy function to a second energy function obtained by removing the term representing the constraint condition from the first energy function. That is, the search performed by the processing unit 12 includes a first search performed using the first energy function, a second search performed using the second energy function obtained by removing the term representing the constraint condition from the first energy function after the first search, and a third search performed using the first energy function after the second search. As described above, the processing unit 12 continues the search by temporarily changing the energy function used for the search from the first energy function to the second energy function, and, thereafter, continues the search by returning from the second energy function to the first energy function.

Before and after the change of the energy function, the values of the plurality of state variables are held in the storage unit 11. For example, the processing unit 12 updates the values of the plurality of state variables by performing the search using the first energy function. The processing unit 12 stores and holds the values of the plurality of state variables immediately before the change of the energy function in the storage unit 11, and continues the search using the changed energy function from the values of the plurality of state variables held immediately after the change. In a case where energy values corresponding to the values of the plurality of state variables converge, the processing unit 12 outputs the values of the plurality of state variables as a solution.

For example, the first energy function E1(x) is E1(x) = D(x) + C(x).

As a first example, a term representing a constraint condition of a removal target may be the own constraint term C(x) (that is, entire terms representing the constraint condition). In this case, the second energy function E2(x) is E2(x) = D(x). In a case where the constraint term C(x) is removed, satisfaction of the constraint term C(x) for the plurality of state variables is irrelevant at one period of the search. In other words, the satisfaction of the entire constraint conditions indicated by the constraint term C(x) is irrelevant at one period of the search.

As a second example, the term representing the constraint condition of the removal target may be some terms of the plurality of terms which are included in the constraint term C(x) and which represent the constraint conditions. For example, the term representing the constraint condition of the removal target may be a term representing a constraint for another state variable of a certain state variable. In this case, for the above-described first energy function E1(x) = D(x) + C(x), the second energy function E2(x) is E2(x) = D(x) + $C_e$(x). A constraint term $C_e$(x) is a constraint term obtained by removing terms representing constraints relevant to some variables from the constraint term C(x). In a case where a term representing a constraint relevant to a certain variable is removed, satisfaction of the constraint for the variable becomes irrelevant at a certain time of the search. In other words, satisfaction of a part of the constraint condition is irrelevant at one period of the search.

For example, it is considered that, in units of a removal candidate term, a parameter (referred to as a constraint term parameter) indicating a weight of the relevant term is given in advance in the constraint term $C(x)$. The processing unit 12 normally sets the constraint term parameter for the removal candidate term to non-zero. The processing unit 12 removes the relevant term from the first energy function $E1(x)$ by setting the constraint term parameter of the removal candidate term to zero at a prescribed timing. The prescribed timing may be, for example, a timing that occurs stochastically or a timing that occurs periodically.

According to the combination optimization apparatus 10, a search for the values of the plurality of state variables that minimize the value of the first energy function is performed, and, in the process of the search, the energy function used for the search is temporarily changed from the first energy function to the second energy function obtained by removing the term representing the constraint condition.

Therefore, it is possible to solve the state in which the transition to the adjacent state is delayed due to the energy barrier. Specifically, as follows.

In a case where the energy function includes the constraint term, constraint violation is formulated to increase the energy, and thus the transition to the adjacent state is delayed due to the energy barrier.

Therefore, it is possible for the combination optimization apparatus 10 to prompt the state transition by temporarily erasing the term representing the constraint condition in the energy function to erase the energy barrier corresponding to the constraint of the term.

FIG. 1 illustrates, as an example, a search example in a case where the second energy function E2 is set such that $E2 = D(x)$ as in the first example for the first energy function $E1(x) = D(x) + C(x)$. A direction from a left side to a right side in FIG. 1 indicates a positive direction of time. For example, the processing unit 12 performs the search using the first energy function $E1(x)$, and changes the energy function to be used for the search to the second energy function $E2(x)$ at a certain point in time. Since the energy barrier corresponding to the constraint term $C(x)$ is erased, the state transition which is delayed progresses while the first energy function $E1(x)$ is not changed. Thereafter, the processing unit 12 returns the energy function to be used for the search to the first energy function $E1(x)$ and continues the search. In this manner, the state transition is prompted, and thus a possibility of reaching a lower energy state is increased.

In the case of the above-described second example, it is possible to partially erase the energy barrier in the first energy function $E1(x)$ by changing the energy function to be used for the search to the second energy function $E2(x) = D(x) + C_e(x)$. As a result, the state transition is promoted, and thus the possibility of reaching the lower energy state is increased.

[Second Embodiment]

Subsequently, a second embodiment will be described.

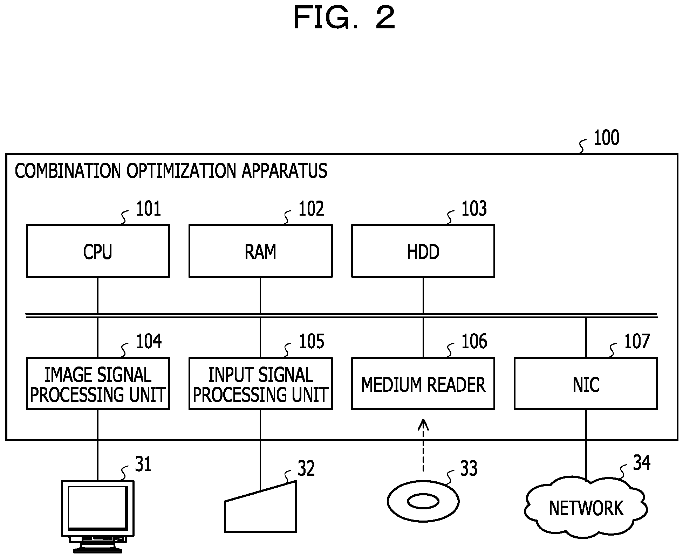

FIG. 2 is a diagram illustrating a hardware example of a combination optimization apparatus according to the second embodiment.

The combination optimization apparatus 100 includes a CPU 101, a RAM 102, a hard disk drive (HDD) 103, an image signal processing unit 104, an input signal processing unit 105, a medium reader 106, and a network interface card (NIC) 107. The hardware is coupled to a bus of the combination optimization apparatus 100. The CPU 101 is an example of the processing unit 12 according to the first embodiment. The RAM 102 or the HDD 103 are examples of the storage unit 11 according to the first embodiment. The combination optimization apparatus 100 may be referred to as a computer.

The CPU 101 is a processor that executes a command of a program. The CPU 101 loads at least a part of the program or data stored in the HDD 103 into the RAM 102, and executes the program. The CPU 101 may include a plurality of processor cores. The combination optimization apparatus 100 may include a plurality of processors. A process which will be described below may be executed in parallel by using the plurality of processors or the processor cores. There is a case where a set of the plurality of processors is referred to as a "multiprocessor" or merely referred to as a "processor".

The RAM 102 is a volatile semiconductor memory which temporarily stores the program executed by the CPU 101 and data used for the operation by the CPU 101. The combination optimization apparatus 100 may include a type of memory other than the RAM, and may include a plurality of memories.

The HDD 103 is a non-volatile storage device that stores software programs, such as an operating system (OS), middleware, and application software, and data. The combination optimization apparatus 100 may include another type of storage device, such as a flash memory or a solid state drive (SSD), and may include a plurality of non-volatile storage devices.

The image signal processing unit 104 outputs an image to a display 31 coupled to the combination optimization apparatus 100 according to a command from the CPU 101. It is possible to use a random type of display, such as a cathode ray tube (CRT) display, a liquid crystal display (LCD), a plasma display, or an organic electro-luminescence (OEL) display, as the display 31.

The input signal processing unit 105 obtains an input signal from an input device 32 coupled to the combination optimization apparatus 100, and outputs the input signal to the CPU 101. It is possible to use a pointing device, such as a mouse, a touch panel, a touch pad, or a trackball, a keyboard, a remote controller, a button switch, or the like, as the input device 32. A plurality of types of input devices may be coupled to the combination optimization apparatus 100.

The medium reader 106 is a reading device that reads a program and data stored in the recording medium 33. It is possible to use, for example, a magnetic disk, an optical disk, a magneto-optical (MO) disk, a semiconductor memory, or the like, as the recording medium 33. The magnetic disk includes a flexible disk (FD) and an HDD. The optical disk includes a compact disc (CD) and a digital versatile disc (DVD).

The medium reader 106 copies, for example, the program and the data read from the recording medium 33 into another recording medium such as the RAM 102 or the HDD 103. The read program is executed by, for example, the CPU 101. The recording medium 33 may be a portable recording medium, and there is a case where the recording medium 33 is used to distribute the program and the data. There is a case where the recording medium 33 and the HDD 103 are referred to as computer-readable recording medium.

The NIC 107 is an interface that is coupled to a network 34 and that performs communication with another computer through the network 34. The NIC 107 is coupled to, for example, a communication device, such as a switch or a router, through a cable. The NIC 107 may be coupled to a communication device that performs wireless communication through a wireless link.

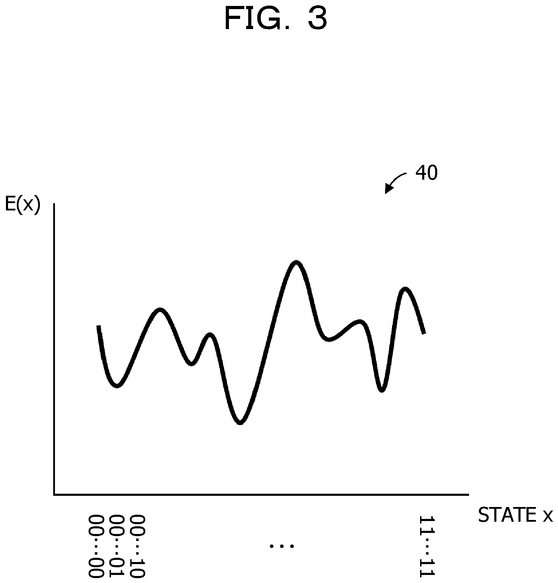

FIG. 3 is a diagram illustrating an example of the energy function.

The combination optimization apparatus 100 searches the combinations of the respective values of the plurality of bits corresponding to the plurality of spins included in the Ising model, obtained through conversion performed on the optimization problem of a calculation target, for a value of each bit in a case where the energy function becomes the minimum value. An Ising-type energy function $E(x)$ is represented by, for example, the above-described Equation (1). In FIG. 3, a graph 40 is illustrated. The graph 40 indicates an example of the energy function $E(x)$.

A horizontal axis of the graph 40 indicates a state x. However, in FIG. 3, the state x which may be taken is represented in one dimension for convenience. A vertical axis of the graph 40 indicates a value of the energy function $E(x)$.

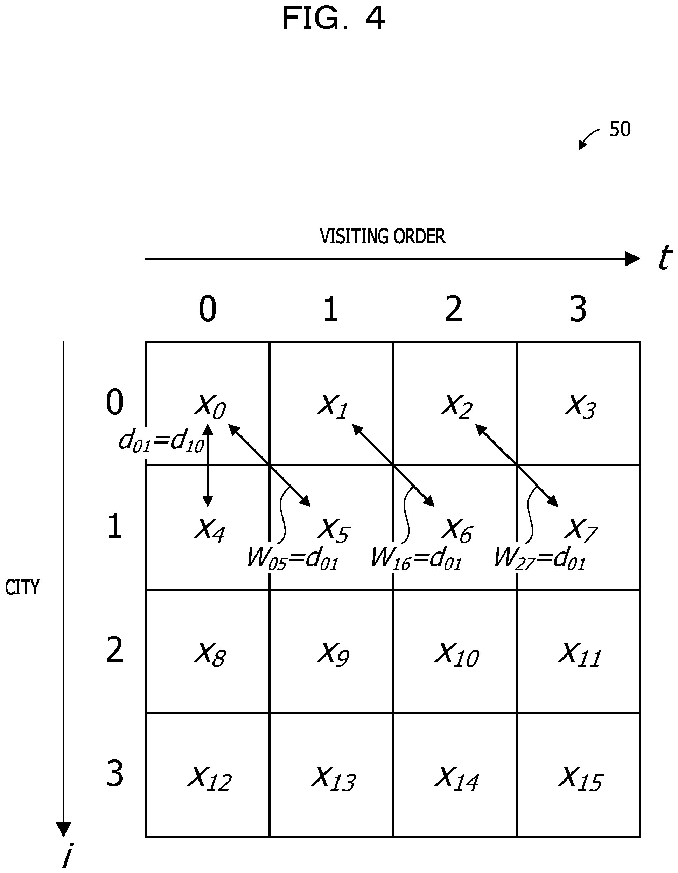

FIG. 4 is a diagram illustrating an example of formulation of a problem.

As an example of the combination optimization problem, the traveling salesman problem is exemplified. However, it is possible to apply a function of the combination optimization apparatus 100 to other combination optimization problems such as a vehicle rooting problem (VRP), a molecular similarity problem, and a maximum cut problem.

In the traveling salesman problem, it is considered to minimize the moving distance desired for one salesman to visit a plurality of cities. The problem is formulated in the QUBO format as follows.

The number of cities is 4. It is assumed that an identification number of the city is i (i is an integer of $0 \leq i \leq 3$). The salesman visits each city one time in order. It is assumed that the order of visiting the cities is t (t is an integer of $0 \leq t \leq 3$). In this case, the state vector is represented by 4 x 4 = 16 bits.

In a case where the traveling salesman does not exist in the city i in a t-th order, bit $x_{ti} = 0$.

In a case where the traveling salesman exists in the city i in the t-th order, bit $x_{ti} = 1$.

In a table 50 of FIG. 4, each bit is represented as follows for 16 combinations of the city identification number i and the order t. That is, $x_{00} = x_0$, $x_{10} = x_1$, ..., $x_{01} = x_4$, ..., $x_{11} = x_5$, .... The suffixes on the right sides of the Equations correspond to the suffixes i and j of the state variable x in Equation (1).

It is assumed that a distance between the city i and city j is $d_{ij}$. For example, $d_{01} = d_{10} = W_{05} = W_{16} = W_{27} = ....$ The suffixes of W in the equation corresponds to the suffixes i and j of the coupling coefficient W in Equation (1).

A total distance D is represented by Equation (7).

[Math. 7]

$$D = \sum_{t,i,j} d_{ij} x_{ti} x_{(t+1)j} \tag{7}$$

The total distance D is a function representing an amount of a minimization target and is an example of the cost term.

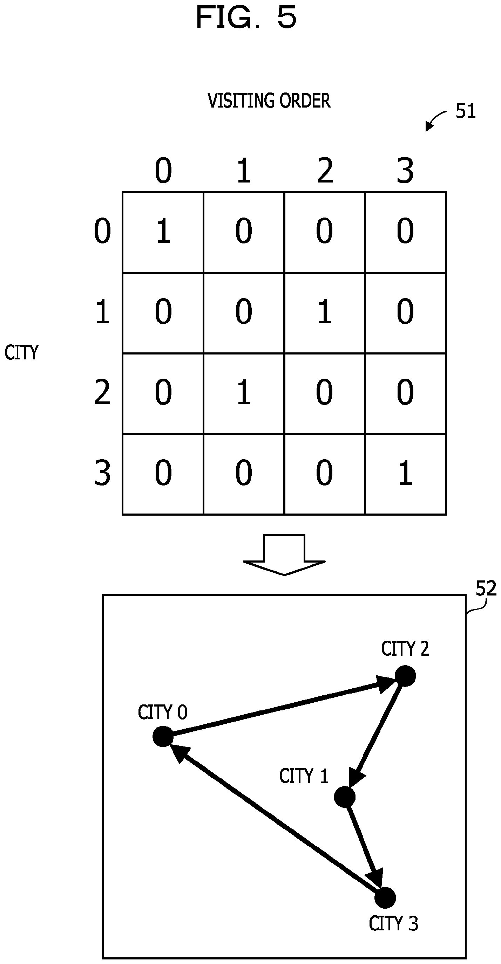

FIG. 5 is a diagram illustrating an example (continuation) of the formulation of the problem.

A table 51 is an example in which a specific value is substituted for each $x_i$ in the table 50 of FIG. 4. Specifically, $x_0 = x_6 = x_9 = x_{15} = 1$, and the other bits are 0. This indicates that the salesman performs visiting in order of a city 0, a city 2, a city 1, and a city 3 and returns to the city 0, as illustrated in a map 52.

There are constraint conditions as follows. That is, the salesman exists in only one city at a certain time. The certain city is passed only once. There is a case where the constraint conditions are referred to as one-hot constraint.

The constraint that the salesman exists in only one city at the certain time is represented by Equation (8).
[Math. 8]

$$\sum_i x_{ti} = 1 \tag{8}$$

In order to suppress increase in a value, for example, becoming a negative number in a case where the constraint is violated, Equation (8) is transformed into Equation (9).
[Math. 9]

$$\left( \sum_i x_{ti} - 1 \right)^2 = 0 \tag{9}$$

Equation (10) is obtained in consideration of a fact that the constraint, in which the salesman exists in only one city at the certain time, is established at all times.
[Math. 10]

$$\sum_t \left( \sum_i x_{ti} - 1 \right)^2 = 0 \tag{10}$$

The constraint of passing through the certain city only once is represented by Equation (11).
[Math. 11]

$$\sum_t x_{ti} = 1 \tag{11}$$

In order to suppress increase in the value, for example, becoming the negative number in the case where the constraint is violated, Equation (11) is transformed into Equation (12).
[Math. 12]

$$\left( \sum_t x_{ti} - 1 \right)^2 = 0 \tag{12}$$

Equation (13) is obtained in consideration of a fact that the constraint of passing through the certain city only once is established in all cities.
[Math. 13]

$$\sum_i \left( \sum_t x_{ti} - 1 \right)^2 = 0 \tag{13}$$

In this case, the constraint term (penalty term) C representing the constraint condition is represented by a weighted sum of the left side of Equation (10) and the left side of Equation (13).

Therefore, the traveling salesman problem is formulated as a problem of obtaining a state vector that minimizes the following energy function E.
[Math. 14]

$$E = D + C \tag{14}$$

Here, the cost term D is represented by Equation (7). The constraint term C is represented by Equation (15).
[Math. 15]

$$C = \alpha \sum_t \left( \sum_i x_{ti} - 1 \right)^2 + \beta \sum_i \left( \sum_t x_{ti} - 1 \right)^2 \tag{15}$$

Here, coefficients a and $\beta$ are positive parameters indicating weights of respective terms in the constraint term C.

The combination optimization apparatus 100 provides a function of efficiently performing a search for a solution that minimizes the energy function E given with the term representing the constraint condition (for example, the constraint term C).

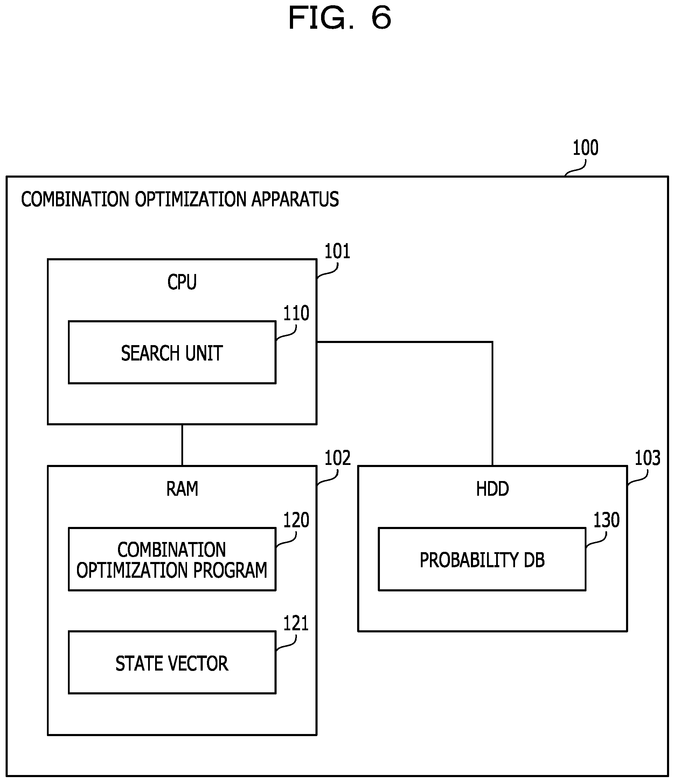

FIG. 6 is a diagram illustrating a functional example of the combination optimization apparatus.

The combination optimization apparatus 100 includes a search unit 110. For example, the CPU 101 exhibits a function of the search unit 110 by executing a combination optimization program 120 stored in the RAM 102.

The search unit 110 searches for a state (optimal solution) that minimizes the energy function corresponding to the combination optimization problem using the stochastic search method such as the simulated annealing. For example, the search unit 110 may use an extended ensemble method such as a replica exchange method or an exchange Monte Carlo method for the search of the optimal solution.

A state of the Ising model is represented by a state vector 121 stored in the RAM 102. It is assumed that a change of one bit of the state vector 121 is one-time state transition. There is a case where a trial to change one bit of the state vector 121 corresponds to the one trial of a ground state search and is referred to as one iteration. Note that, there is a case where bit transition does not occur for one trial.

In the process of the search for the optimal solution, the search unit 110 removes the term representing the constraint condition included in the energy function based on the probability DB 130 stored in the HDD 103. Removal of the term representing the constraint condition may be mentioned as erasing of the term representing the constraint condition. In the example of the second embodiment, the term representing the constraint condition includes the entire constraint terms. That is, the search unit 110 sets the entire constraint terms as the removal targets.

Here, Equation (15) is represented as Equation (16).
[Math. 16]

$$C = P \left\{ \sum_j \left( \sum_i x_{ij} - 1 \right)^2 \right.$$

$$\left. + \sum_i \left( \sum_j x_{ij} - 1 \right)^2 + \cdots \right\} \tag{16}$$

A constraint term parameter P represents a weight of each of all the terms in the constraint term C. The constraint term parameter P takes a value of non-zero (P ≠ 0) or zero (P = 0). The value of non-zero of the constraint term parameter P is determined depending on the problem. In a case of searching for a state of minimum energy, the non-zero P is P >> 0 (relatively large positive value). The search unit 110 performs setting such that P ≠ 0 in a case where the constraint term C is not removed for Equation (14) indicating the energy function E, and performs setting such that P = 0 in a case where the constraint term C is removed.

The probability DB 130 is information indicating a probability for determining a timing at which the term representing the constraint condition is erased by the search unit 110. At least some data of the probability DB 130 may be stored in the RAM 102. The probability DB 130 is input to the combination optimization apparatus 100 by the user and is stored in the HDD 103 in advance.

For example, based on the probability DB 130, the search unit 110 performs setting such that P = 0 in an $n_k$-th trial and performs setting such that P >> 0 in the other trials. The search unit 110 stochastically and randomly obtains $n_k = n_0, n_1, n_2, ...$ based on the probability indicated in the probability DB 130. For example, in a case where the probability DB 130 indicates a probability of 1/100, the search unit 110 performs setting such that P = 0 at a frequency of approximately one of 100 times of trials and performs setting such that P ≠ 0 in the other trials.

Note that, an operation in which the number of times of a prescribed percentage of a certain number of times is determined to be true and the other number of times is determined to be false is performed using, for example, a pseudo random number. As an example, a case where it is determined to be true at a probability of 1/100 is considered. "True" means that the term representing the constraint condition is erased. In this case, it is considered that the search unit 110 generates the pseudo random number in a notch of 0.01 in a range of, for example, 0.01 to 1 immediately before each trial, and sets true in a case where the generated pseudo random number is 1 and false in a case where the pseudo random number is 0.01 to 0.99.

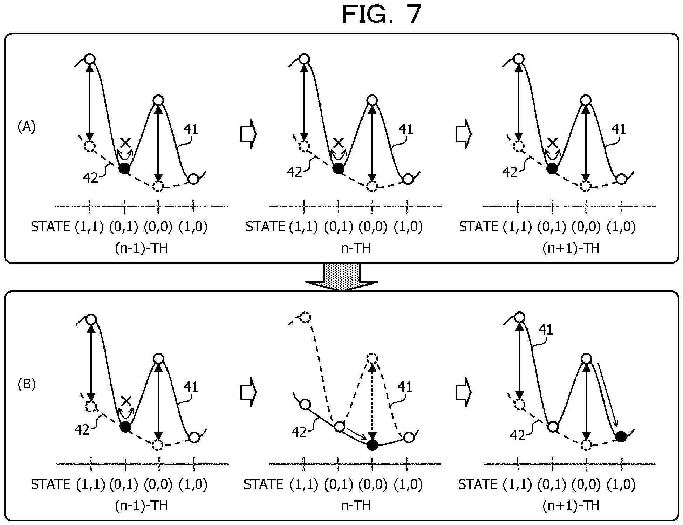

FIG. 7 is a diagram illustrating an example of erasing of the term representing the constraint condition.

FIG. 7(A) illustrates a case where the term representing the constraint condition is not erased.

A series 41 indicates the first energy function including the constraint term corresponding to the combination optimization problem. A series 42 indicates the second energy function obtained by removing the constraint term from the energy function. An energy function that is used at a certain timing is indicated by a solid line, and an energy function that is not used at the certain timing is indicated by a dotted line (the same may be applied to the following drawings). For both the energy functions, a horizontal axis indicates the state, and a vertical axis (not illustrated) indicates a value of the energy function. Note that, in order to simplify the description, the horizontal axis indicates a state represented by two bits.

In the first energy function, a high energy barrier exists at a state (1, 1) and a state (0, 0) due to one-hot constraint, as indicated by the series 41.

In FIG. 7(A), after a (n-1)-th trial, falling into a local solution corresponding to a state (0, 1). Thereafter, even if n-th and (n+1)-th state transitions are is attempted, it is not possible to transition to the state of 2 bits ahead (for example, a state (1, 0) having lower energy) by being blocked by the energy barrier in the first energy function, thereby being stayed at the same state (0, 1). As described above, there is a case where a possibility of escaping from the local solution is low in the first energy function including the constraint term.

FIG. 7(B) illustrates a case where the term representing the constraint condition is erased by the search unit 110. The search unit 110 removes the constraint term in the first energy function at an n-th timing based on the probability DB 130.

In FIG. 7(B), after a (n-1)-th trial, falling into the local solution corresponding to the state (0, 1). In an n-th trial, the search unit 110 uses the second energy function obtained by removing the constraint term from the first energy function. In the second energy function, the one-hot constraint disappears, and, as indicated by the series 42, the high energy barrier existing in the series 41 at the state (1, 1) and the state (0, 0) is erased. Therefore, the state transition is prompted in the n-th trial, and, for example, the state transitions to the state (0, 0) having lower energy than the state (0, 1) in the second energy function.

In a (n+1)-th trial, the search unit 110 returns the energy function to be used for the search to the first energy function. For example, after the (n+1)-th trial, the state (0, 0) transitions to the state (1, 0) having lower energy than the state (0, 0) in the first energy function. As described above, it is possible for the search unit 110 to prompt transition to a state existing before the energy barrier corresponding to the constraint term by temporarily removing the constraint term from the first energy function.

In the above example, although the search unit 110 uses the second energy function in one trial, the second energy function may be temporarily used in a plurality of consecutive trials.

Subsequently, a processing procedure of the combination optimization apparatus 100 will be described.

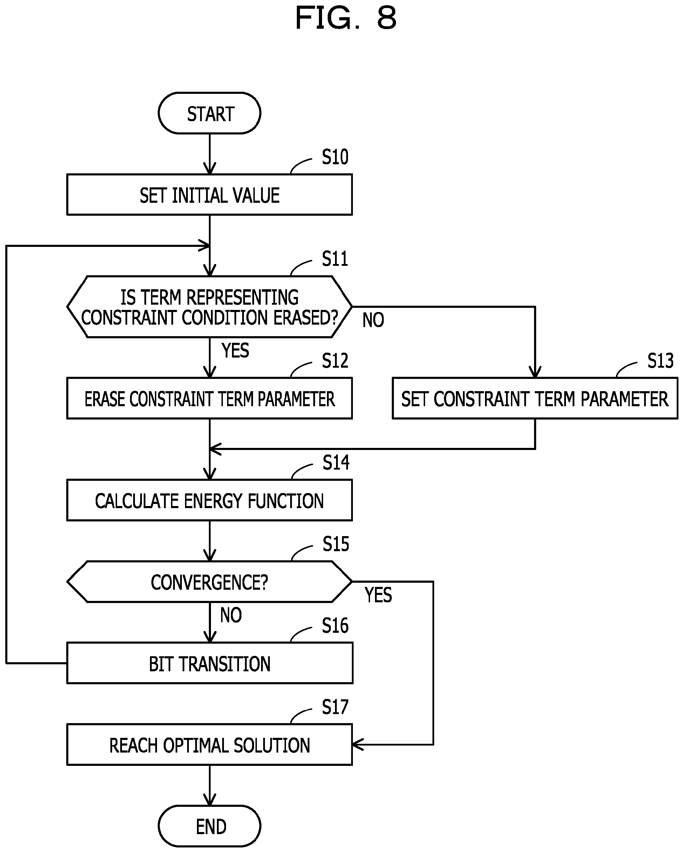

FIG. 8 is a flowchart illustrating an example of the search.

(S10) The search unit 110 sets an initial value for the energy function E. For example, for the above-described traveling salesman problem, a value of a distance d between cities, a value of non-zero of the constraint term parameter P, an initial value of the state vector, and an initial value of the temperature are set. It is possible to set the energy function of Equation (14) as the format of Equation (1). In this case, the distance d between cities and the value of the constraint term parameter P are reflected in the coupling coefficient W and the bias b. Therefore, in a case where the format of Equation (1) is used as the energy function, the search unit 110 may set the values of the coupling coefficient W and the bias b. Information on a value of each parameter is input to the combination optimization apparatus 100 in advance by the user.

(S11) The search unit 110 determines whether or not to erase the term representing the constraint condition. In a case where the term representing the constraint condition is erased, the process proceeds to step S12. In a case where the term representing the constraint condition is not erased, the process proceeds to step S13. As described above, based on the probability DB 130, the search unit 110 stochastically determines whether or not to erase the term representing the constraint condition in a current trial. For example, in the case where the probability DB 130 indicates a probability of 1/100, the search unit 110 determines to erase the term representing the constraint condition at the frequency of approximately one of 100 times of trials. Erasing of the term representing the constraint condition from the first energy function corresponds to changing of the energy function used for the search from the first energy function to the second energy function. Therefore, it may be mentioned that the decision in step S11 is a process of stochastically determining whether or not to use the second energy function in the current trial of the state transition in the search of the ground state.

(S12) The search unit 110 erase the constraint term parameter. That is, the search unit 110 sets the constraint term parameter P as P = 0 to erase the constraint term C included in the energy function E of Equation (14). Alternatively, in a case where the energy function E is represented in the format of Equation (1), the search unit 110 may store the coupling coefficient W and the bias b, obtained in a case where the constraint term parameter P is set as P = 0, in the RAM 102 in advance. In this case, the search unit 110 may replace the coupling coefficient W and the bias b used for the search by the coupling coefficient W and the bias b in a case where P ≠ 0 to change to the coupling coefficient W and the bias b in a case where P = 0. The process proceeds to step S14.

(S13) The search unit 110 sets the constraint term parameter to the value of non-zero. That is, the search unit 110 maintains the constraint term C included in the energy function E of Equation (14) by setting the constraint term parameter P as P ≠ 0. Alternatively, in a case where the energy function E is represented in the format of Equation (1), the search unit 110 may set the coupling coefficient W and the bias b, which are used for the search, to the initial coupling coefficient W and bias b (in a case where P ≠ 0). In a case where P ≠ 0 immediately before step S13, the search unit 110 may skip step S13 and proceed to step S14. In a case where P = 0 immediately before step S13, the energy function used for the search is returned to the initial energy function by executing step S13.

(S14) The search unit 110 calculates an energy value according to the state vector 121 based on the energy function of Equation (14) or Equation (1). The energy function used in step S14 differs depending on whether or not step S12 (set as P = 0) or step S13 (set as P ≠ 0) is passed.

(S15) The search unit 110 determines whether or not the energy value is converged. In a case where the energy value is converged, the process proceeds to step S17. In a case where the energy value is not converged, the process proceeds to step S16. For example, in a case where the energy value calculated in step S14 does not change even though steps S11 to S16 are repeatedly performed a prescribed number of times, the search unit 110 determines that the energy value is converged.

(S16) The search unit 110 performs a trial of transition of random one bit in the state vector 121 based on Equation (5) or Equation (6). The process proceeds to step S11. The energy function used in step S16 is the same as the energy function used in the immediately before step S14. Note that, the search unit 110 decreases the temperature used for the determination of the state transition at every prescribed number of iterations.

(S17) The search unit 110 determines that the state vector 121 has reached the optimal solution, and outputs the finally obtained state vector 121. For example, the search unit 110 may display the state vector 121 on the display 31, or may transmit the state vector 121 to another computer through the network 34. In addition, the search unit 110 may convert the state vector 121 indicating the optimal solution into data that is easy for the user to understand as the solution of the combination optimization problem and may display the data on the display 31, or may transmit the data, obtained after the conversion, to another computer through the network 34.

In step S15, the energy function used at the timing in which it is determined that the energy value is converged may be P ≠ 0 or P = 0. A reason for this is that, in a case where the energy value converges at the optimal solution, it is considered that the energy value converges regardless that P ≠ 0 and P = 0.

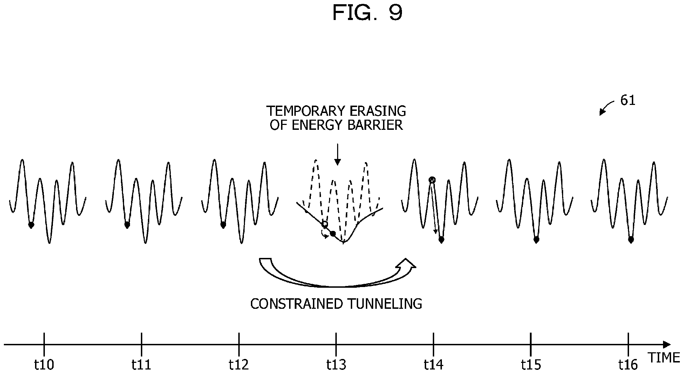

FIG. 9 is a diagram illustrating an example of the search.

A series 61 illustrates energy functions used for the search at respective times of times t10 to t16 represented by a horizontal axis (time). A vertical axis (not illustrated) of FIG. 9 indicates the values of the energy functions.

For example, at times t10, t11, and t12, the first energy functions including the constraint terms are used. The search at times t10, t11, and t12 corresponds to the first search of the first embodiment. At time t13, the second energy function obtained by removing the constraint term is used. The search at time t13 corresponds to the second search of the first embodiment. At times t14, t15, and t16, the first energy function is used again. The search at times t14, t15, and t16 corresponds to the third search of the first embodiment.

At time t13, the energy barrier corresponding to the constraint term included in the first energy function temporarily is erased. Therefore, the state transition blocked by the energy barrier is promoted. For example, even in a case of falling into the local solution in the first energy function at time t12, there is a high possibility that, at time t14, pseudo tunneling is performed on the energy barrier from the state at time t12 to transition to another state ahead of the two Hamming distances. The tunneling means passing through the energy barrier. In FIG. 9, a fact that the energy barrier is erased and the pseudo tunneling is performed is referred to as "constraint tunneling".

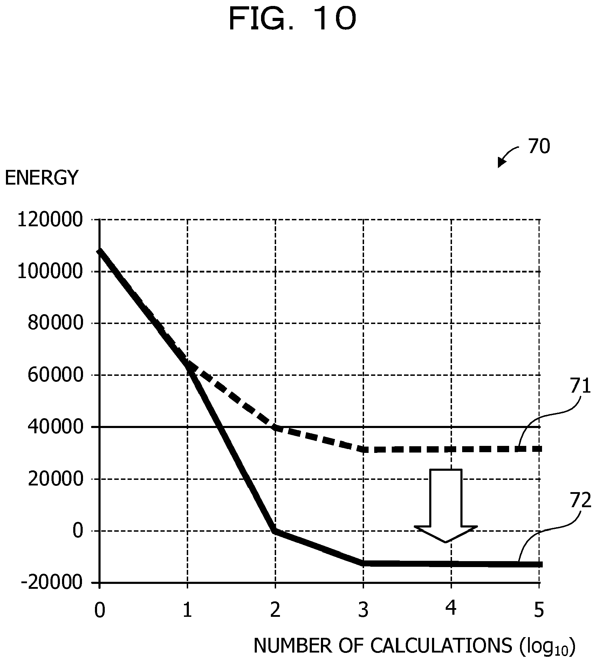

FIG. 10 is a diagram illustrating an example of energy of a solution.

A graph 70 indicates an example of a relationship between the number of calculations and an energy value of a reached solution in a certain knapsack problem. The number of calculations corresponds to the number of iterations. A horizontal axis of the graph 70 represents a common logarithm value of the number of calculations. A vertical axis of the graph 70 indicates the energy value of the reached solution.

The knapsack problem is a problem of obtaining a combination of items that maximizes a total value of the items to be put into a knapsack having a capacity limit. A condition of the knapsack problem in the example is as follows. The number of knapsacks is 1. The number of items to be put into the knapsack is 20. That is, the number of combinations of the items to be put into the knapsack is $2^{20}$. It is assumed that a value of an item i is $v_i$. $v_{1 \text{ to } 5} = 24$. $v_{6 \text{ to } 10} = 23$. $v_{11 \text{ to } 15} = 22$. $v_{16 \text{ to } 20} = 18$. It is assumed that a weight of the item i is $w_i$. $w_{1 \text{ to } 5} = 15$. $w_{6 \text{ to } 10} = 14$. $w_{11 \text{ to } 15} = 13$. $w_{16 \text{ to } 20} = 12$. An upper limit capacity $C_j$ of the knapsack is 72.

Series 71 and 72 are illustrated in the graph 70.

The series 71 is a comparative example and illustrates a result obtained by performing the search without removing the term representing the constraint condition.

The series 72 indicates a result obtained by performing the search while adding a process of temporarily removing the term representing the constraint condition by the search unit 110. In the example, the term representing the constraint condition of the removal target includes the entire constraint terms. Here, a probability that the constraint term parameter P = 0 is set to 1/100 as an example.

In a case where the series 71 and 72 are compared, the energy value of the state is lowered earlier in the series 72 than in the series 71. In the series 72, the energy value of a finally reached solution is lower than that of the series 72.

The example of the series 71 illustrates that transition from the local solution is not performed and there is a high probability that it is not possible to escape from the local solution.

The example of the series 72 illustrates that there is a high probability that it is possible to escape from the local solution due to the above-described constraint tunneling, and thus it is easy to reach a solution that minimizes the energy value.

As described above, according to the combination optimization apparatus 100, it is possible to prompt the delayed bit transition to reach the optimal solution by temporarily erasing the constraint term C included in the energy function E.

[Third Embodiment]

Subsequently, a third embodiment is described. Facts that are different from the above-described second embodiment will be mainly described, and descriptions of common facts will not be repeated.

In the second embodiment, the entire constraint terms are indicated as an example of the term representing the constraint condition which is the removal target. On the other hand, the term representing the constraint condition which is the removal target may be some terms included in the constraint term. In the third embodiment, an example, in which the term representing the constraint condition which is the removal target is set as the some terms included in the constraint term, will be described.

A hardware example and a functional example of a combination optimization apparatus 100 according to the third embodiment are the same as the examples illustrated in FIGs. 2 and 6, and thus the description thereof will not be repeated. However, the third embodiment is different from the second embodiment in that the term representing the constraint condition is erased by the search unit 110 as follows.

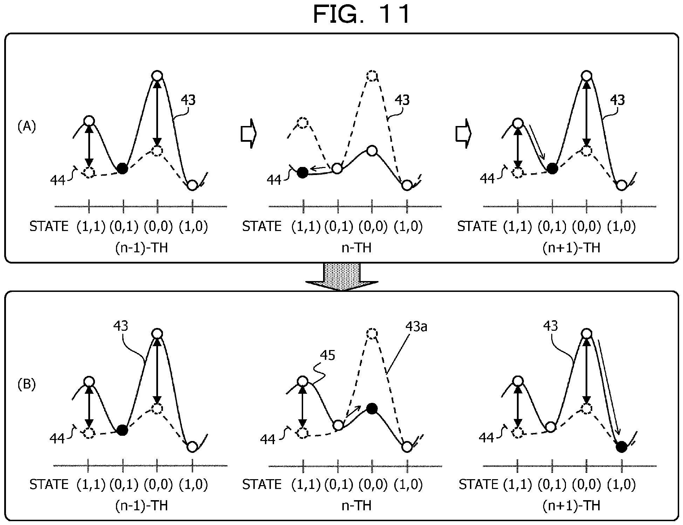

FIG. 11 is a diagram illustrating an example of erasing the term representing the constraint condition according to the third embodiment.

In the third embodiment, the constraint term C in Equation (14) is represented by Equation (17).

[Math. 17]

$$C = \left\{ \sum_{j} \left( \sum_{i} P_{ij} x_{ij} - P_0 e_l \right)^2 \right.$$

$$\left. + \sum_{i} \left( \sum_{j} P_{ij} x_{ij} - P_0 e_l \right)^2 + \cdots \right\} \qquad (17)$$

A constraint term parameter $P_{ij}$ represents a weight of a constraint on a variable $x_{ij}$. For the examples of the traveling salesman problem illustrated in FIGs. 4 and 5, i of Equation (17) corresponds to the visiting order t in FIG. 4, and j of Equation (17) corresponds to the city identification number i in FIG. 4 (however, a correspondence relationship between i and j in Equation (17) and t and j in FIG. 4 may be reversed). The search unit 110 performs setting such that $P_{ij} = 0$ in a $n_{ijk}$-th trial, and performs setting such that $P_{ij} = P_0 >> 0$ in the other cases. $P_0$ is a constant of $P_0 >> 0$. $P_{ij}$ and $P_0$ are defined according to the problem. A term indicated by ... in Equation (17) may also include $P_{ij}$ and $e_l$.

The constraint term parameter $e_l$ controls validity/invalidity of $P_0$ in a term of $P_0 e_l$. The search unit 110 performs setting such that $e_l = 0$ in an $n_l$-th trial, and performs setting such that $e_l = 1$ in other cases.

The search unit 110 stochastically and randomly determines $n_{ijk} = n_{000}, n_{001}, ...,$ and $n_l = n_0, n_1, ....$ For example, the search unit 110 may set probabilities that $P_{ij}$ and $e_l$ are set to zero as the same probability or different probabilities. The probability may also be referred to as a frequency. The search unit 110 may set the probability that $P_{ij}$ is set to zero to be higher than the probability that $e_l$ is set to zero. Otherwise, the search unit 110 may set the probability that $e_l$ is set to zero to be higher than the probability that $P_{ij}$ is set to zero. The probabilities are stored in the probability DB 130 in advance.

For all sets of i and j, in a case where at least one $P_{ij}$ is $P_{ij} \neq 0$ and $e_l = 0$, a state in which all bits are 0 is a unique state that satisfies the constraint term in Equation (17). In this case, the transition to the state in which all bits are 0 is prompted.

In a case where $P_{ij} = 0$ and $e_l = 0$ for the all sets of i and j, all the terms representing the constraint terms are erased, and thus the constraint terms in Equation (17) are erased from the energy function in Equation (14). This corresponds to removing the entire constraint terms. That is, it is possible to represent the example of the second embodiment as a special case of the example of the third embodiment.

However, in a case where transition through the state in which all bits are 0 and erasing of the entire constraint terms are not expected, setting may be performed such that $e_l = 1$ in Equation (17).

It is possible to cause a term of $\Sigma_j(\Sigma_i P_{ij} x_{ij} - P_0 e_l)^2$ in Equation (17) to correspond to, for example, the constraint condition of passing through the certain city only once in the traveling salesman problem illustrated in FIGs. 4 and 5. In addition, it is possible to cause a term $\Sigma_i(\Sigma_j P_{ij} x_{ij} - P_0 e_l)^2$ in Equation (17) to correspond to, for example, the constraint condition that only one city exists at the certain time in the traveling salesman problem illustrated in FIGs. 4 and 5. Among the term $\Sigma_j(\Sigma_i P_{ij} x_{ij} - P_0 e_l)^2$ and the term $\Sigma_i(\Sigma_j P_{ij} x_{ij} - P_0 e_l)^2$, a term $P_{ij} x_{ij}$ may be mentioned as one of the terms representing the constraint conditions. Among the term $\Sigma_j(\Sigma_i P_{ij} x_{ij} - P_0 e_l)^2$ and the term $\Sigma_i(\Sigma_j P_{ij} x_{ij} - P_0 e_l)^2$, the term $P_0 e_l$ may also be mentioned as one of the terms representing these constraint conditions.

FIG. 11(A) illustrates an example in which the entire constraint terms are temporarily erased in the search.

A series 43 indicates the first energy function including the constraint term corresponding to the combination optimization problem. In the description of FIG. 11, the first energy function is represented by E1. A series 44 indicates the second energy function obtained by removing the entire constraint terms from the first energy function E1. In the description of FIG. 11, the second energy function obtained by removing the entire constraint terms from the first energy function E1 is represented by E2a. For both the energy functions, a horizontal axis indicates the state, and a vertical axis (not illustrated) indicates a value of the energy function. Note that, in order to simplify the description, the horizontal axis indicates a state represented by two bits.

In the first energy function E1, the high energy barrier exists at the state (1, 1) and the state (0, 0) due to the one-hot constraint, as indicated by the series 43.

In FIG. 11(A), after the (n-1)-th trial, falling into the local solution corresponding to the state (0, 1). In the n-th trial, the second energy function E2a obtained by removing the entire constraint terms from the first energy function E1 is used. Accordingly, the state transition is prompted. However, as indicated in the example of the series 44, regardless that there is a state of lower energy in the first energy function E1 before the state (0, 0), there is a case where transition is performed to a side of the state (1, 1) of the lower energy in the second energy function E2a. In this case, for example, in the (n+1)-th trial using the first energy function E1, there is a case of returning to the state (0, 1) again.

FIG. 11(B) illustrates an example in which some terms included in the constraint terms are temporarily erased in the search. In FIG. 11(B), after the (n-1)-th trial, falling into the local solution corresponding to the state (0, 1). In the n-th trial, the search unit 110 uses the second energy function obtained by removing only the constraint corresponding to the state (0, 0) from the first energy function E1. In the description of FIG. 11, the second energy function obtained by removing only some constraints from the first energy function E1 is represented by E2b. A series 45 indicates the second energy function E2b. In the series 45, only a peak 43a corresponding to the state (0, 0) in the series 43 is removed from the series 43. Therefore, a possibility of transition to the state (0, 0) increases rather than a case where the first energy function E1 and the second energy function E2a are used. For example, the transition to the state (0, 0) is performed by the n-th trial.

In the (n+1)-th trial, the search unit 110 returns the energy function used for the search to the first energy function E1. For example, after the (n+1)-th trial, the state (0, 0) transitions to a state (1, 0) having the lower energy than the state (0, 0) in the first energy function E1. As described above, the search unit 110 temporarily removes some terms included in the constraint term from the first energy function E1, and thus it is possible to prompt the transition to the state existing before the energy barrier according to the some terms.

Although, in the above example, the search unit 110 uses the second energy function E2b in one trial, the second energy function E2b may be used in a plurality of consecutive trials.

Here, the search unit 110 temporarily removes some terms included in the constraint term from the first energy function according to the same procedure as in FIG. 8. For example, the search unit 110 performs the process in steps S11, S12, and S13 of FIG. 8 for each removal candidate term. It is possible to represent the energy function E including the constraint term C represented in Equation (17) at the format of Equation (1). In this case, the values of the constraint term parameters $P_{ij}$ and $e_l$ are reflected in the coupling coefficient W and the bias b in Equation (1). Here, the search unit 110 may obtain the coupling coefficient W and the bias b in the case of removing the term for each term of the removal candidate in Equation (17) in advance and may store the coupling coefficient W and the bias b in the RAM 102. In this case, in steps S12 and S13, the search unit 110 may change the energy function to be used for the search by switching the coupling coefficient W and the bias b to be used to correspond to the terms of the removal targets.

The search unit 110 performs a process of temporarily changing the energy function used for the search a plurality of times in the process of the search, and changes the term representing the constraint condition of the removal target at a certain time and another time. Therefore, it possible to erase each of a plurality of energy barriers in the first energy function at an individual timing.

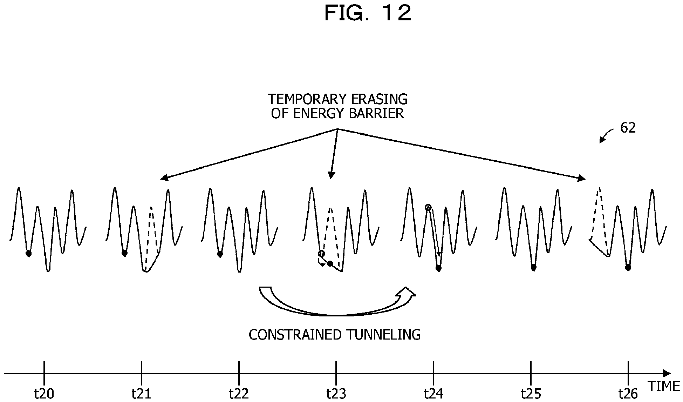

FIG. 12 is a diagram illustrating an example of the search.

A series 62 illustrates energy functions used for the search at respective times of times t20 to t26 represented by a horizontal axis (time). A vertical axis (not illustrated) of FIG. 12 indicates the values of the energy functions.

For example, at times t20, t22, t24, and t25, the first energy functions including the constraint term are used. At times t21, t23, and t26, a plurality of types of second energy functions obtained by removing some terms included in the constraint terms are used. The terms of the removal targets are different in trials of state transition at respective times of times t21, t23, and t26.

The searches at times t20, t22, and t25 correspond to the first search of the first embodiment. The search at times t21, t23, and t26 corresponds to the second search of the first embodiment. The search at times t22 and t24 corresponds to the third search of the first embodiment. The search at time t22 corresponds to the first search and the third search of the first embodiment.

At times t21, t23, and t26, the energy barrier corresponding to some terms of the constraint terms included in the first energy function is temporarily erased. Therefore, the state transition blocked by the energy barrier is promoted. For example, even in a case of falling into the local solution in the first energy function at time t22, there is a high possibility that there is a high probability that constraint tunneling is performed from the state at time t22 to transition to another state ahead of the two Hamming distances at time t24.

As described above, the search unit 110 temporarily removes some terms of the constraint terms included in the first energy function, and thus it possible to prompt the delayed bit transition to reach the optimal solution.

Note that, the search unit 110 may receive a selection input indicating whether a unit of the term of the removal candidate is the entire constraint term or a part of the terms included in the constraint term according to the problem, and may switch the unit of the term of the removal candidate according to the selection input. In this manner, the user is capable of selecting an appropriate search method according to the problem.

[Fourth Embodiment]

Subsequently, a fourth embodiment will be described. Facts that are different from the above-described second and third embodiments will be mainly described, and descriptions of common facts will not be repeated.

In the fourth embodiment provides a function of erasing the term representing the constraint condition exemplified in the second and third embodiments in a case of falling into the local solution in the search by the first energy function including the constraint term.

A hardware example and a functional example of the combination optimization apparatus 100 according to the fourth embodiment are the same as the examples illustrated in FIGs. 2 and 6, and thus the description thereof will not be repeated. The fourth embodiment is different from the second and third embodiments in that the term representing the constraint condition is erased by the following procedure by the search unit 110.

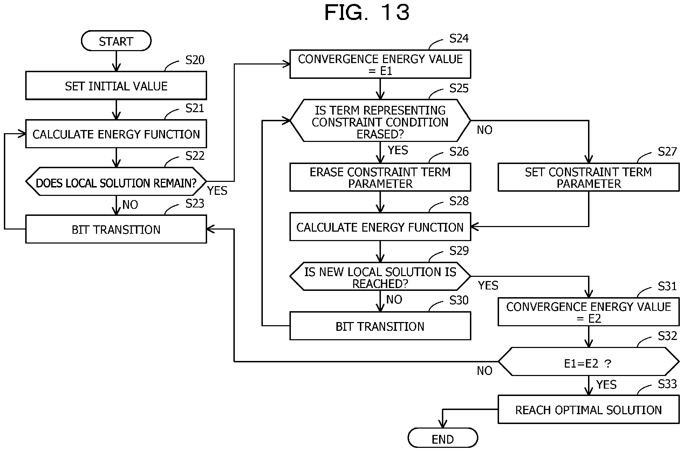

FIG. 13 is a flowchart illustrating an example of a search according to the fourth embodiment.

(S20) The search unit 110 sets an initial value for the energy function E. For example, for the above-described traveling salesman problem, the value of the distance d between cities, the non-zero value of the value of the constraint term parameter P (or $P_{ij}$ and the constant $P_0$), the initial value of the state vector, and the initial value of the temperature are set. It is possible to set the energy function of Equation (14) as the format of Equation (1). In this case, the distance d between cities and the value of the constraint term parameter P (or $P_{ij}$ and $P_0 e_l$) are reflected in the coupling coefficient W and the bias b. Therefore, in a case where the format of Equation (1) is used as the energy function, the search unit 110 may set the values of the coupling coefficient W and the bias b. Information on a value of each parameter is input to the combination optimization apparatus 100 in advance by the user.

(S21) The search unit 110 calculates an energy value corresponding to the state vector 121 based on the energy function of Equation (14) or Equation (1). The energy function used in step S21 is the first energy function in which any constraint term parameter in the constraint term has non-zero value.

(S22) The search unit 110 determines whether or not the local solution remains. In a case where the local solution remains, the process proceeds to step S24. In a case where the local solution does not remain, the process proceeds to step S23. For example, in a case where the energy value calculated in step S21 does not change even though steps S21 to S23 are repeatedly executed a prescribed number of times, the search unit 110 determines that the local solution remains.

(S23) The search unit 110 performs a trial of transition of random one bit in the state vector 121 based on Equation (5) or Equation (6). The process proceeds to step S21. The energy function used in step S23 is the first energy function. Note that, the search unit 110 decreases the temperature used for the determination of the state transition at every prescribed number of iterations.

(S24) The search unit 110 sets the convergence energy value corresponding to the local solution as the variable E1 and holds the variable E1 over the RAM 102.

(S25) The search unit 110 determines whether or not to erase the term representing the constraint condition. In a case where the term representing the constraint condition is to be erased, the process proceeds to step S26. In a case where the term representing the constraint condition is not to be erased, the process proceeds to step S27. As described above, based on the probability DB 130, the search unit 110 stochastically determines whether or not to erase the term representing the constraint condition in a current trial. As in the third embodiment, in a case where terms included in the constraint terms are partially removed, the search unit 110 executes the determination in step S24 for each removal candidate term.

(S26) The search unit 110 erases the constraint term parameter. That is, the search unit 110 sets the constraint term parameter P (or $P_{ij}$ or $e_l$) to P = 0 ($P_{ij}$ = 0 or $e_l$ = 0), thereby erasing at least a part of the terms representing the constraint conditions included in the energy function E of Equation (14). Alternatively, in the case where the energy function E is represented at the format of Equation (1), the search unit 110 may store the coupling coefficient W and the bias b in the RAM 102 in advance in a case where the constraint term parameter or a set of constraint term parameters is set to zero. In this case, the search unit 110 may change the coupling coefficient W and the bias b used for the search to the coupling coefficient W and the bias b in a case where the constraint term parameter or the set of the constraint term parameters is zero. The process proceeds to step S28. Note that, since steps S25 to S27 are executed for each removal candidate term, there is a case where a plurality of terms are removed at one timing in step S25.

(S27) The search unit 110 sets the constraint term parameter to the non-zero value. That is, the search unit 110 sets the constraint term parameter P (or $P_{ij}$ or $e_l$) to non-zero and maintains the term representing the constraint condition included in the energy function E of Equation (14). Alternatively, in a case where the energy function E is represented at the format of Equation (1), the search unit 110 may set the coupling coefficient W and the bias b used for the search to the coupling coefficient W and the bias b in the case where all the constraint term parameters are non-zero. Note that, in a case where all the constraint term parameters are non-zero immediately before step S27, the search unit 110 may skip step S27 and proceed to step S28. In a case where any of the constraint term parameters is zero immediately before step S27, the energy function used for the search is returned to the initial energy function by executing step S27. However, since steps S25 to S27 are executed for each removal candidate term, there is a case where another constraint term parameter is set to zero at a timing at which a certain constraint term parameter, which is set to zero, is set to non-zero.

(S28) The search unit 110 calculates an energy value corresponding to the state vector 121 based on the energy function of Equation (14) or Equation (1). The energy function used in step S28 differs according to which of step S26 or step S27 is performed.

(S29) The search unit 110 determines whether or not a new local solution is reached. In a case where the new local solution is reached, the process proceeds to step S31. In a case where the new local solution is not reached, the process proceeds to step S30. For example, in a case where the energy value calculated in step S28 does not change even though steps S25 to S30 are repeatedly executed a prescribed number of times, the search unit 110 determines that the new local solution is reached.

(S30) The search unit 110 performs a trial of transition of one bit in the state vector 121 based on Equation (5) or Equation (6). The process proceeds to step S25. The energy function used in step S30 is the same as the energy function used in the immediately before step S28. Note that, the search unit 110 decreases the temperature used for the determination of the state transition at every prescribed number of iterations.

(S31) The search unit 110 sets the convergence energy value corresponding to the new local solution as a variable E2 and holds the variable E2 over the RAM 102.

(S32) The search unit 110 determines whether or not E1 = E2. In a case where E1 = E2, the process proceeds to step S33. In a case where E1 ≠ E2, the process proceeds to step S23.

(S33) The search unit 110 determines that the state vector 121 reaches the optimal solution, and outputs the finally obtained state vector 121. For example, the search unit 110 may display the state vector 121 on the display 31, or may transmit the state vector 121 to another computer through the network 34. In addition, the search unit 110 may convert the state vector 121 indicating the optimal solution into data that is easy for the user to understand as the solution of the combination optimization problem and may display the data on the display 31, or may transmit the data, obtained after the conversion, to another computer through the network 34.

As described above, the search unit 110 performs a normal ground state search while there is no possibility of falling into the local solution. In a case where there is a possibility of falling into the local solution, the search unit 110 applies the erasing control of the term based on erasing condition of the term representing the constraint condition designated in advance. It is possible to use the method of the second embodiment or the method of the third embodiment to perform the erasing control. In a case where the energy values obtained after the application of the erasing control are the same, the search unit 110 determines that the optimal solution has converged.

As exemplified in the fourth embodiment, only in a case where it is determined that the first energy function falls into the local solution, the term representing the constraint condition included in the first energy function is allowed to be removed, and thus it is possible to reduce an operation load in a case where the first energy function does not fall into the local solution.

[Fifth Embodiment]

Subsequently, a fifth embodiment will be described. Facts that are different from the above-described second to fourth embodiments will be mainly described, and descriptions of common facts will not be repeated.

In the second to fourth embodiments, an example, in which the function of the search unit 110 is exhibited in such a way that the CPU 101 in the combination optimization apparatus 100 executes the combination optimization program 120, is illustrated. On the other hand, the function of the search unit 110 may be realized by a semiconductor integrated circuit such as an FPGA.

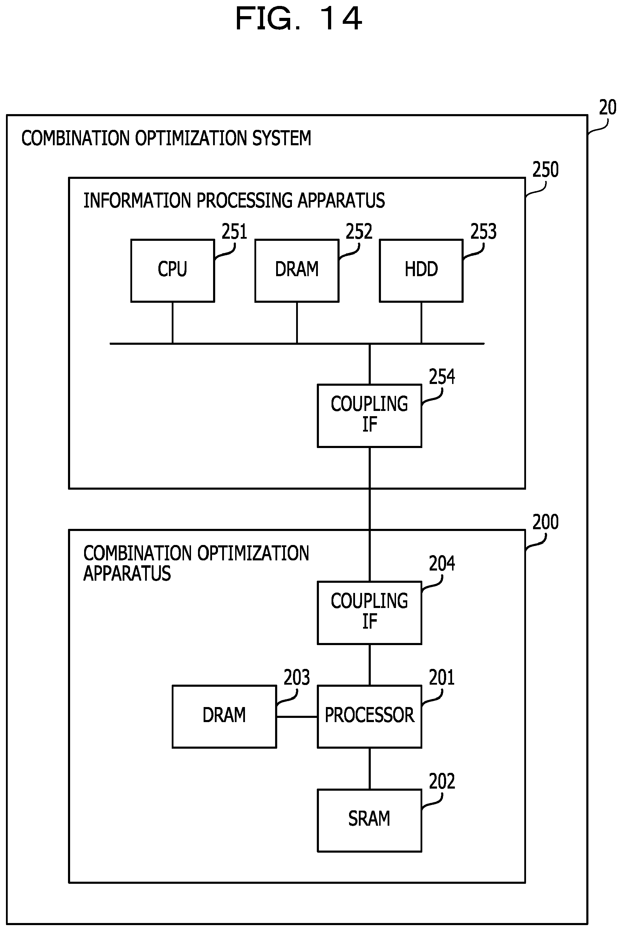

FIG. 14 is a diagram illustrating an example of a combination optimization system according to the fifth embodiment.

A combination optimization system 20 includes a combination optimization apparatus 200 and an information processing apparatus 250.

The combination optimization apparatus 200 is used as an accelerator for searching for a solution for the combination optimization problem at high speed by hardware. The combination optimization apparatus 200 includes a processor 201, a static RAM (SRAM) 202, a dynamic RAM (DRAM) 203, and a coupling interface (IF) 204.

The processor 201 is the semiconductor integrated circuit, such as the FPGA, which executes the processing of the search unit 110. The processor 201 is an example of the processing unit 12 according to the first embodiment.

The SRAM 202 stores the coupling coefficient W corresponding to a set of two bits included in the state vector and the bias b for each bit, for example, the coupling coefficient W and the bias b which are used for the current search.

The DRAM 203 stores the coupling coefficient W and the bias b corresponding to the first energy function including the constraint term, and the coupling coefficient W and the bias b corresponding to the second energy function obtained by removing the term representing the constraint condition from the first energy function.

The coupling IF 204 is an interface for coupling to the information processing apparatus 250.

The information processing apparatus 250 includes a CPU 251, a DRAM 252, an HDD 253, and a coupling IF 254.

The CPU 251 is an arithmetic unit of the information processing apparatus 250, and performs input of various parameters for the combination optimization apparatus 200, instruction to start an arithmetic operation, acquisition of an arithmetic operation result from the combination optimization apparatus 200, and the like.

The DRAM 252 is a main storage device of the information processing apparatus 250, and stores various programs and data used for processing of the CPU 251. The DRAM 252 may store information to be stored in the DRAM 203 or may be used instead of the DRAM 203. In this case, the combination optimization apparatus 200 may not include the DRAM 203.

The HDD 253 is an auxiliary storage device of the information processing apparatus 250, and stores various programs and data used for the processing of the CPU 251.

The coupling IF 254 is an interface for coupling to the combination optimization apparatus 200.

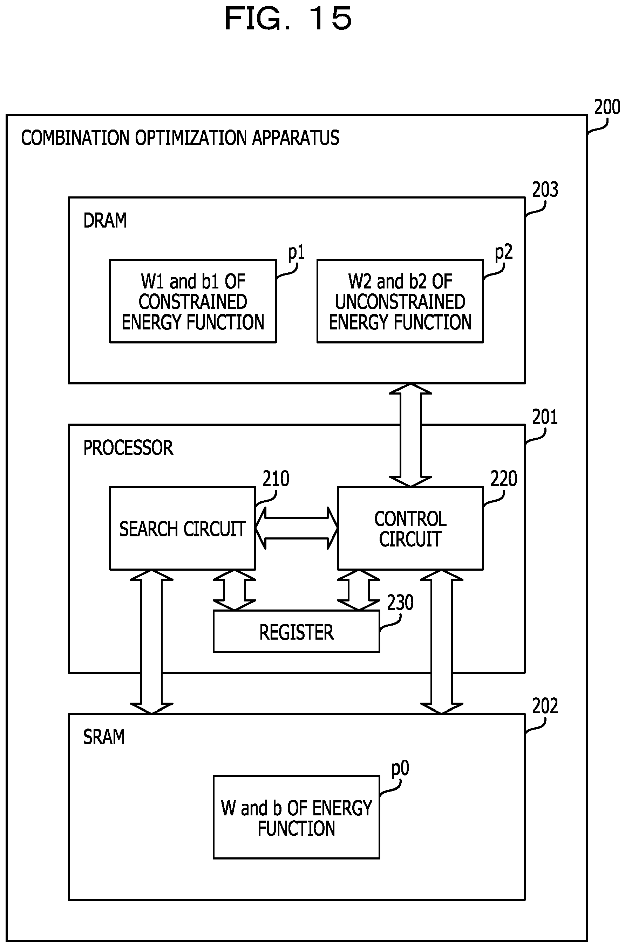

FIG. 15 is a diagram illustrating a circuit configuration example of the combination optimization apparatus.

The processor 201 includes a search circuit 210, a control circuit 220, and a register 230.

The search circuit 210 performs the ground state search of the Ising model whose energy function is represented in the format of Equation (1). In a case where a value of any of the state variables is changed in the state vector, the search circuit 210 calculates the change value of energy in a case where each of the values of the plurality of state variables is set as a subsequent change candidate based on the values of the plurality of state variables and the coupling coefficient stored in the SRAM 202. A value of one state variable is represented by one bit as described above. The search circuit 210 changes a value of any of the plurality of state variables based on a set temperature value, a random number value, and the change values of the plurality of energies. The search circuit 210 executes the calculation of the change value of the energy in parallel in a case where each of the values of the plurality of state variables is set as a subsequent change candidate.

The control circuit 220 stores, in the SRAM 202, a first coupling coefficient for each set of state variables corresponding to the first energy function in which all the constraint term parameters are non-zero. The control circuit 220 causes the search circuit 210 to start the ground state search. In the process of the search by the search circuit 210, the control circuit 220 temporarily changes the first coupling coefficient stored in the SRAM 202 to a second coupling coefficient for each set of state variables corresponding to the second energy function in which at least any one of the constraint term parameters is zero.

For example, data p0 indicates the coupling coefficient W for each set of the state variables and the bias b for each state variable, which are used for the search of the search circuit 210. The data p0 is stored in the SRAM 202. Data p1 indicates a first coupling coefficient W1 and a first bias b1 of the first energy function which is a constraint energy function. Data p2 indicates a second coupling coefficient W2 and a second bias b2 of the second energy function which is an unconstraint energy function. The data p1 and p2 are stored in the DRAM 203 in advance by the CPU 251. The control circuit 220 changes the energy function used for the search circuit 210 to perform the search by replacing the data p0 stored in the SRAM 202 with any of the data p1 and p2 based on the data p1 and p2 stored in the DRAM 203. However, the bias b in the data p0 is used to calculate the local field for each state variable that is set in the search circuit 210. Therefore, the control circuit 220 may store a calculation result of the local field in a prescribed register in the search circuit 210 without storing the bias b in the SRAM 202. In a case where there are a plurality of removal candidate terms, the DRAM 203 may hold, for each removal candidate term, the coupling coefficient W2 and the bias b2 corresponding to the energy function in a case where the term is removed.

The register 230 stores the state vector. For example, the SRAM 202 and the register 230 are an example of the storage unit 11 of the first embodiment.

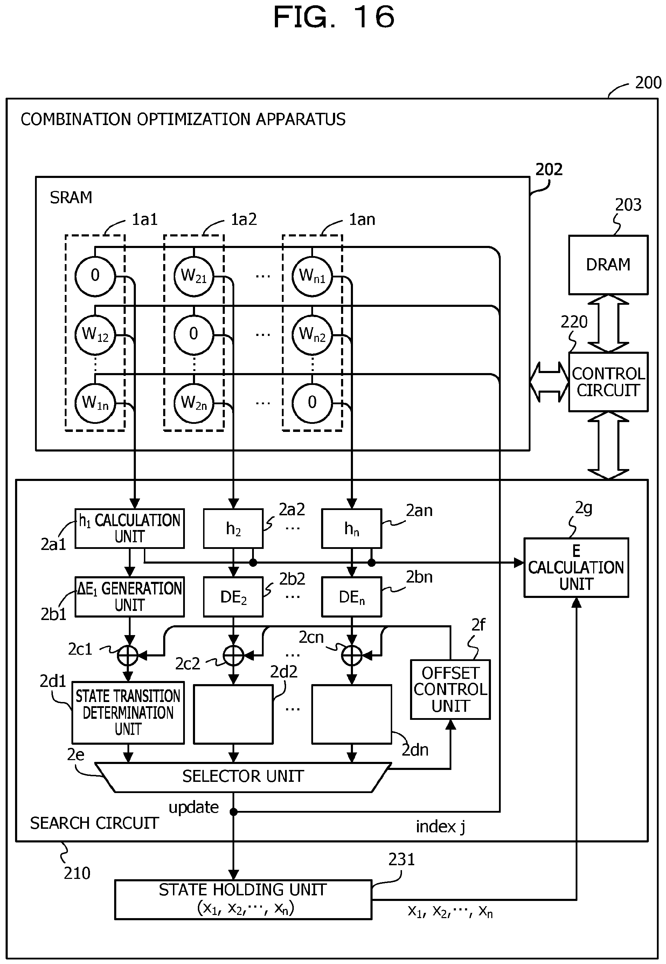

FIG. 16 is a diagram illustrating the circuit configuration example of the search circuit.

The search circuit 210 performs the ground state search for a state vector of n bits (n is an integer which is equal to or larger than 2). Each bit is distinguished by an integer index i ($1 \leq i \leq n$).

The search circuit 210 includes h calculation units 2a1, 2a2, ..., 2an, $\Delta E$ generation units 2b1, 2b2, ..., 2bn, adders 2c1, 2c2, ..., 2cn, state transition determination units 2d1, 2d2, ..., 2dn, a selector unit 2e, an offset control unit 2f, and an E calculation unit 2g.

In FIG. 16, for the h calculation units 2a1 to 2an, names are expressed by attaching a suffix i, such as "$h_i$" calculation unit so as to be easily understood that the h calculation unit corresponds to an i-th bit. In FIG. 16, for the $\Delta E$ generation units 2b1 to 2bn, names are expressed by attaching a suffix i, such as a "$\Delta E_i$" calculation unit, so as to be easily understood that the $\Delta E$ generation unit corresponds to the i-th bit.

Determination of which bit included in the state vector is to be inverted in a certain search circuit and inversion of a relevant bit according to a result of the determination correspond to one trial of the ground state search by the search circuit. However, there is a case where the inversion of the bit does not occur by the one trial. The one trial is repeatedly performed. The number of repetitions of one trial is referred to as the number of iterations.

An operation, in which the h calculation unit 2a1, the $\Delta E$ generation unit 2b1, the adder 2c1, and the state transition determination unit 2d1 are relevant to a first bit among the n bits, is performed. An operation, in which the h calculation unit 2a2, the $\Delta E$ generation unit 2b2, the adder 2c2, and the state transition determination unit 2d2 are relevant to a second bit, is performed. A numerical value i at an end of sign, such as "2a1" or "2b1", indicates that an operation corresponding to an i-th bit i is performed. That is, one search circuit includes n sets of the h calculation unit, the $\Delta E$ generation unit, the adder, and the state transition determination unit. One set is a unit of an arithmetic processing circuit that performs an operation relevant to one spin bit, and may be referred to as "neurons". In a case where n neurons are in parallel and an operation relevant to a bit corresponding to each of the neurons is performed in parallel, the operation is performed at high speed.

Information stored in the SRAM 202 and the register 230 (not illustrated in FIG. 16) will be described.

The SRAM 202 stores the coupling coefficient W for each pair of bits included in the state vector. In a case where the number of bits of the state vector is n, the total number of coupling coefficients is $n^2$. The SRAM 202 includes memory circuits 1a1, 1a2, ..., 1an.

The memory circuit 1a1 stores coupling coefficients $W_{11}$ to $W_{1n}$. The coupling coefficients $W_{11}$ to $W_{1n}$ are used for the operation of the neuron corresponding to the first bit. The memory circuit 1a2 stores coupling coefficients $W_{21}$ to $W_{2n}$. The coupling coefficients $W_{21}$ to $W_{2n}$ are used for the operation of the neuron corresponding to the second bit. The memory circuit 1an stores $W_{n1}$ to $W_{nn}$. $W_{n1}$ to $W_{nn}$ are used for the operation of the n-th neuron. Note that, $W_{ii} = 0$.

The register 230 is used as a state holding unit 231. The state holding unit 231 holds the state vector in the search circuit 210.

Hereinafter, the h calculation unit 2a1, the $\Delta$E generation unit 2b1, the adder 2c1, and the state transition determination unit 2d1 corresponding to the first neuron will be mainly described as examples. The h calculation units 2a2 to 2an, the $\Delta$E generation units 2b2 to 2bn, the adders 2c2 to 2cn, and the state transition determination units 2d2 to 2dn, which are components having the same name, have the same function.

A bit corresponding to a set of the h calculation unit 2a1, the $\Delta$E generation unit 2b1, the adder 2c1, and the state transition determination unit 2d1 is referred to as an own spin bit, and the other bits operated in the search circuit 210 are referred to as other spin bits.

The memory circuit 1a1 outputs a coupling coefficient $W_{1j}$ corresponding to an index j supplied from the selector unit 2e to the h calculation unit 2a1.

The h calculation unit 2a1 calculates the local field hi based on Equations (3) and (4) using the coupling coefficient $W_{1j}$ supplied from the memory circuit 1a1. For example, the h calculation unit 2a1 includes a register for holding the local field hi previously calculated, and updates hi stored in the register by integrating $\delta h_1^{(j)}$ according to an inversion direction of the bit indicated by the index j to hi. A signal indicating the inversion direction of the spin bit indicated by the index j may be supplied from the selector unit 13c to the h calculation unit 12b1. An initial value of hi is calculated in advance by Equation (3) according to $b_1$ depending on the problem, and is set in advance in the register of the h calculation unit 2a1. The h calculation unit 2a1 outputs the calculated local field hi to the $\Delta$E generation unit 2b1 and the E calculation unit 2g.

The $\Delta$E generation unit 2b1 generates the change value $\Delta E_1$ of the energy of the Ising model corresponding to the inversion of the own spin bit based on Equation (2) using the local field hi. For example, the $\Delta$E generation unit 2b1 may determine the inversion direction of the own spin bit from a current value of the own spin bit supplied from the state holding unit 231 (the inversion direction is from 0 to 1, in a case where the current value is 0, and the inversion direction is from 1 to 0 in a case where the current value is 1). The $\Delta$E generation unit 2b1 outputs the change value $\Delta E_1$ of the generated energy to the adder 2c1. The $\Delta$E generation unit 2b1 may output the change value $\Delta E_1$ of the energy, obtained by inverting the sign of the change value $\Delta E_1$ of the energy, to the adder 2c1 in accordance with an addition processing in the adder 2c1 at a subsequent stage and a determination processing in the state transition determination unit 2d1. In the example, it is assumed that the $\Delta$E generation unit 2b1 outputs $-\Delta E_1$ to the adder 2c1 as the change value of the energy.

The adder 2c1 adds $-\Delta E_1$ supplied from the $\Delta$E generation unit 2b1 and an offset value $E_{off}$ supplied from the offset control unit 2f. As will be described later, the offset value $E_{off}$ is a parameter for prompting the state transition, and is controlled by the offset control unit 2f. In the example, $E_{off} \geq 0$. The initial value of $E_{off}$ is 0. $E_{off}$ is gradually increased by the offset control unit 2f according to a situation of the state transition. The adder 2c1 outputs an addition result ($-\Delta E_1 + E_{off}$) to the state transition determination unit 2d1.

The state transition determination unit 2d1 outputs a flag $f_1$ indicating whether or not to invert the own spin bit to the selector unit 13c according to a sum ($-\Delta E_1 + E_{off}$) of the change value of the energy supplied from the adder 2c1 and the offset $E_{off}$. Specifically, the state transition determination unit 2d1 determines whether or not to invert the own spin bit according to a comparison of $-\Delta E_1 + E_{off}$ and thermal noise according to temperature.

Here, the determination by the state transition determination unit 2d1 will be described.

In the simulated annealing, an allowable probability A ($\Delta E$, $\beta$) = f($-\beta\Delta E$) of the state transition that causes a certain energy change $\Delta E$ is determined by the Metropolis method or the Gibbs method as in Equation (5). As described above, in Equation (5), $\beta$ is the inverse temperature (1/T). Therefore, A($\Delta E$, $\beta$) = A($\Delta E$, T) = f($-\Delta E$/T). The temperature T is set in the state transition determination unit 2d1 by the control circuit 220. The control circuit 220 gradually lowers the temperature T set in the search circuit 210 for each prescribed number of iterations by the search circuit 210.

For example, it is possible to realize a circuit that outputs a flag (flg = 1) indicating that the state transition, which causes the energy change $\Delta E$ at an allowable probability A($\Delta E$, $\beta$), by a comparator that outputs a value according to the comparison of the uniform random number u that takes a value of A =f($-\Delta E$/T) and a value of an interval [0, 1].

However, it is also possible to realize the same function even in a case where the following modification is performed. Even in a case where the same monotonically increasing function acts on two numbers, a magnitude relationship does not change. Therefore, even in a case where the same monotonically increasing function acts on two inputs of the comparator, an output of the comparator does not change. For example, it is possible to use an inverse function $f^{-1}(-\Delta E/T)$ of $f(-AE/T)$ as the monotonically increasing function that acts on $f(-\Delta E/T)$ and it is possible to use $f^{-1}(u)$, in which $-\Delta E/T$ of $f^{-1}(-\Delta E/T)$ is used as u, as the monotonically increasing function that acts on the uniform random number u. In this case, a circuit having the same function as the above-described comparator may be a circuit that outputs 1 in a case where $-\Delta E/T$ is larger than $f^{-1}(u)$. Furthermore, since the temperature parameter T is positive, the state transition determination unit 2d1 may be a circuit that outputs flg = 1 in a case where $-\Delta E$ is equal to or larger than $T \cdot f^{-1}(u)$ (or in a case where $\Delta E$ is equal to or smaller than $- (T \cdot f^{-1}(u))$).

The state transition determination unit 2d1 generates the uniform random number u, and generates a value of $f^{-1}(u)$ by using a conversion table for converting the uniform random number u into the value of $f^{-1}(u)$. In a case where the Metropolis method is applied, $f^{-1}(u) = \ln(u)$. In a case where the Gibbs method is applied, $f^{-1}(u) = \ln(u/(1 - u))$. Therefore, in a case where the Metropolis method is applied, Equation (6) is obtained.

The conversion table is stored in, for example, a register included in the state transition determination unit 2d1. The state transition determination unit 2d1 generates a product $(T \cdot f^{-1}(u))$ of the temperature parameter T and $f^{-1}(u)$, and compares the product with $-\Delta E_1 + E_{off}$. Here, $T \cdot f^{-1}(u)$ corresponds to thermal noise. There is a case where thermal noise is associated with thermal excitation energy in physics. In a case where $(-\Delta E_1 + E_{off}) \geq T \cdot f^{-1}(u)$, the state transition determination unit 2d1 outputs the flag $f_1 = 1$ (transition is possible) to the selector unit 2e. In a case where $(-\Delta E_1 + E_{off}) < T \cdot f^{-1}(u)$, the state transition determination unit 2d1 outputs the flag $f_1 = 0$ (transition is not possible) to the selector unit 2e.

The state transition determination unit 2d1 may modify $(-\Delta E_1 + E_{off}) \geq T \cdot f^{-1}(u)$, and may output a flag indicating whether or not the transition is possible according to a comparison of an evaluation value, obtained by adding the noise value $T \cdot f^{-1}(u)$ corresponding to the temperature to $(\Delta E_1 - E_{off})$, and a threshold value (for example, 0).

The selector unit 2e receives the flag indicating whether or not the transition is possible, which is output from each of the state transition determination units 2d1 to 2dn. In a case where the flag indicating that the transition is possible exists in the flag, which is output from each of the state transition determination units 2d1 to 2dn, the selector unit 2e selects any one flag indicating that the transition is possible. The selector unit 2e selects one prescribed flag in a case where the flag indicating that the transition is possible does not exist in the flag output from each of the state transition determination units 2d1 to 2dn.

The selector unit 2e outputs an update signal (update), which includes the flag indicating whether or not the transition is possible and the index j indicating a bit corresponding to the selected flag, to the state holding unit 231. The selector unit 2e outputs the selected flag indicating whether the transition is possible to the offset control unit 2f, and outputs the index j corresponding to the selected flag to each of the memory circuits 1a1 to 1an.

The offset control unit 2f controls the offset value to be supplied to each of the adders 2c1 to 2cn based on the flag indicating whether or not the transition is possible, which is output from the selector unit 2e. Specifically, in a case where the flag output from the selector unit 2e indicates that the transition is possible, the offset control unit 2f resets the offset value to 0. In a case where the flag output from the selector unit 2e indicates that the transition is not possible, the offset control unit 2f adds an increment value $\Delta E_{off}$ to the offset value. In a case where the flag continuously indicates that the transition is not possible, the offset control unit 2f increases $E_{off}$ by $\Delta E_{off}$ by integrating $\Delta E_{off}$. The method is referred to as a dynamic offset method.

In a case where the flag output from the selector unit 2e indicates that the transition is not possible, it is considered that a current state falls into the local solution. With the addition of the offset value to $-\Delta E_1$ and the gradual increase in the offset value to be added, the state transition becomes easy to be allowed, and, in a case where the current state is in the local solution, the escape from the local solution is promoted.

The state holding unit 231 updates the state vector $(x_1, x_2, ..., x_n)$ held by the state holding unit 231 based on the flag and the index output from the selector unit 2e. The state holding unit 231 outputs the current state vector to the E calculation unit 2g. The state holding unit 231 outputs the state vector at a time of completion of the search processing in the search circuit 210 to the control circuit 220.

The E calculation unit 2g calculates the current energy value of the Ising model in the search circuit 210 based on the local fields $h_1$ to $h_n$ output from the respective h calculation units 2a1 to 2an and the state vectors $(x_1$ to $x_n)$ output from the state holding unit 231. It is possible for the E calculation unit 2g to calculate the energy value by the product-sum of the local fields and the state vectors based on Equation (1) and Equation (3).

The control circuit 220 controls an operation of the search circuit 210. In a case where an input of an activation signal is received from the information processing apparatus 250, the control circuit 220 starts the operation of the ground state search by setting initial parameters in the SRAM 202 and the search circuit 210 and activating the search circuit 210.

The control circuit 220 temporarily replaces the coupling coefficient held in the SRAM 202 by another coupling coefficient held in the DRAM 203 in the process of the search performed by the search circuit 210. The control circuit 220 calculates the local field of each bit corresponding to the energy function after performing replacement by Equation (3) and sets the local field in the search circuit 210 based on the state vector held in the state holding unit 231 at replacement timing. Therefore, the energy function used for the search performed by the search circuit 210 is changed.

For example, the control circuit 220 sets W corresponding to the first energy function, in which all the constraint term parameters are non-zero, in the SRAM 202 immediately before the start of the search. The search circuit 210 sets the initial value of the local field of each bit according to b corresponding to the first energy function in the h calculation units 2a1 to 2an.

The control circuit 220 reads W and b corresponding to the second energy function, from which the term representing the constraint condition is removed, from the DRAM 203 at a certain timing in the process of the search, and sets the read W in the SRAM 202. The control circuit 220 calculates the local field of each bit based on the state vector held in the state holding unit 231 and b read from the DRAM 203 at the timing, and sets the local field in the h calculation units 2a1 to 2an.

In a case where the search circuit 210 is caused to perform a trial of the state transition one or more times using the second energy function, the control circuit 220 returns the coupling coefficient W of the SRAM 202 and the local field h of the search circuit to the first energy function by performing the same processing as above.

The timing at which the control circuit 220 changes the energy function used for the search from the first energy function to the second energy function may be a stochastic timing, for example, a frequency of approximately one of 100 times of trials, as exemplified in the second and third embodiments. As exemplified in the fourth embodiment, in a case where it is determined to fall into the local solution, the control circuit 220 may measure the timing and may change the energy function used for the search from the first energy function to the second energy function.

In a case where the operation by the search circuit 210 ends, the control circuit 220 acquires the state vector and the energy value from the search circuit 210, and outputs the state vector and the energy value as the solution to the information processing apparatus 250.

The information processing apparatus 250 converts the solution obtained by the combination optimization apparatus 200 into data that is easy for the user to understand, and displays the data on a display device, such as a display coupled to the information processing apparatus 250, or transmits the data to another computer.

As described above, according to the combination optimization apparatus 200, the term representing the constraint included in the energy function, is temporarily erased, and thus it is possible to reach the optimal solution by prompting the delayed bit transition.

In the combination optimization apparatus 200, it is possible to use the dynamic offset method and the constraint tunneling in combination to promote the state transition. For example, in a case where escape from the local solution is not expected even though the dynamic offset method is used, the state transition is further promoted by using the constraint tunneling.

For example, in a case where the replica exchange method is used, the combination optimization apparatus 200 may have a plurality of replicas by using a set of the SRAM 202, the search circuit 210, and the state holding unit 231 as one replica. In this case, the control circuit 220 sets a different temperature for each replica and stochastically exchanges the temperature or the state information using the replica of adjacent temperatures at a prescribed timing. The state information corresponds to the state vector and the local field. For example, a probability based on the metropolis method is used as a probability for the exchange. In order to temporarily change the energy function used for the search to the energy function from which the term representing the constraint condition is removed in the process of the search, the control circuit 220 individually performs a process of replacing the coupling coefficient and the local field held in the SRAM for each replica. Therefore, even in a case where the replica exchange method is used in the combination optimization apparatus 200, it is possible to solve the state in which the transition to the adjacent state is delayed due to the energy barrier.

It is possible to realize the information processing according to the first embodiment by causing the processing unit 12 to execute a program. However, as exemplified in the fifth embodiment, it is possible to realize the processing unit 12 by using the dedicated electronic circuit. It is possible to realize the information processing according to the second to fourth embodiments by causing the CPU 101 to execute the combination optimization program 120. It is possible to record the combination optimization program 120 in the computer-readable recording medium 33.

For example, in a case where the recording medium 33, in which the program, such as the combination optimization program 120, is recorded, is distributed, it is possible to circulate the program. The program may be stored in another computer and the program may be distributed through the network. For example, the computer may install the program stored in the recording medium 33 or the program received from another computer in the storage device, such as the RAM 102 or the HDD 103, may read the program from the storage device, and may execute the program.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1.  A combination optimization apparatus comprising:

    a storage unit that stores values of a plurality of state variables included in a first energy function given with a term representing a constraint condition for the plurality of state variables; and
    a processing unit that performs a search for the values of the plurality of state variables which minimize a value of the first energy function,
    wherein the search performed by the processing unit includes a first search performed by using the first energy function, a second search performed by using a second energy function obtained by removing the term representing the constraint condition from the first energy function after the first search, and a third search performed by using the first energy function after the second search.

2.  The combination optimization apparatus according to claim 1,
    wherein the first energy function includes a parameter representing a weight of the term of a removal candidate, and
    wherein the processing unit changes the first energy function to the second energy function by setting the parameter to zero from a value of non-zero, and changes the second energy function to the first energy function by returning the parameter to the value of non-zero from zero.

3.  The combination optimization apparatus according to claim 1 or 2,
    wherein the first energy function includes a plurality of the terms representing the constraint condition, and
    wherein the second energy function is a function obtained by removing some terms of the plurality of terms from the first energy function.

4.  The combination optimization apparatus according to claim 3,
    wherein the processing unit performs the search a plurality of times, and change the term of a removal target in a certain time and another time.

5.  The combination optimization apparatus according to claim 1 or 2,
    wherein the first energy function includes a plurality of the terms representing the constraint condition, and
    wherein the second energy function is a function obtained by removing all of the plurality of terms from the first energy function.

6.  The combination optimization apparatus according to any one of claims 1 to 5,
    wherein the processing unit stochastically determines whether or not to execute the second search in a trial of state transition in the search.

7.  The combination optimization apparatus according to any one of claims 1 to 6,
    wherein the processing unit executes the second search in a case of falling into a local solution by the first search.

8.  The combination optimization apparatus according to claim 1,
    wherein the storage unit stores a coupling coefficient for each set of state variables corresponding to the energy function used for the search, and
    wherein the processing unit includes

    a search circuit that, in a case where any of the values of the plurality of state variables is changed, calculates change values of energies in a case where the respective values of the plurality of state variables are set as subsequent change candidates based on the values of the plurality of state variables and the coupling coefficient stored in the storage unit, and changes any of the values of the plurality of state variables stored in the storage unit based on a set temperature value, a random number value, and the change values of a plurality of the energies, and
    a control circuit that stores a first coupling coefficient for each set of state variables corresponding to the first energy function in the storage unit, and, in a process of the search by the search circuit, changes the first coupling coefficient stored in the storage unit to a second coupling coefficient for each set of state variables corresponding to the second energy function.

9. A combination optimization method, in which a combination optimization apparatus performs a search for values of a plurality of state variables which minimize a value of a first energy function including the plurality of state variables and given with a term representing a constraint condition for the plurality of state variables,
wherein the search includes a first search performed by using the first energy function, a second search performed by using a second energy function obtained by removing the term representing the constraint condition from the first energy function after the first search, and a third search performed by using the first energy function after the second search.

10. A combination optimization program causing a computer to execute a process of performing a search for values of a plurality of state variables which minimize a value of a first energy function including the plurality of state variables and given with a term representing a constraint condition for the plurality of state variables,
wherein the search includes a first search performed by using the first energy function, a second search performed by using a second energy function obtained by removing the term representing the constraint condition from the first energy function after the first search, and a third search performed by using the first energy function after the second search.

# FIG. 1

COMBINATION OPTIMIZATION APPARATUS 10

STORAGE UNIT 11

PROCESSING UNIT 12

E1  E1  E2  E1  E1

TRIAL WITH FIRST ENERGY FUNCTION

TRIAL WITH SECOND ENERGY FUNCTION

TRIAL WITH FIRST ENERGY FUNCTION

TIME

# FIG. 2

~ 100

COMBINATION OPTIMIZATION APPARATUS

~ 101
CPU

~ 102
RAM

~ 103
HDD

~ 104
IMAGE SIGNAL PROCESSING UNIT

~ 105
INPUT SIGNAL PROCESSING UNIT

~ 106
MEDIUM READER

~ 107
NIC

~ 31

~ 32

~ 33

~ 34
NETWORK

# FIG. 3

# FIG. 4

# FIG. 5

VISITING ORDER

51

|   | 0 | 1 | 2 | 3 |
|---|---|---|---|---|
| 0 | 1 | 0 | 0 | 0 |
| 1 | 0 | 0 | 1 | 0 |
| 2 | 0 | 1 | 0 | 0 |
| 3 | 0 | 0 | 0 | 1 |

CITY

52

CITY 2

CITY 0

CITY 1

CITY 3

# FIG. 6

# FIG. 7

(A)

STATE (1,1) (0,1) (0,0) (1,0)
(n-1)-TH

41
42

STATE (1,1) (0,1) (0,0) (1,0)
n-TH

41
42

STATE (1,1) (0,1) (0,0) (1,0)
(n+1)-TH

41
42

(B)

STATE (1,1) (0,1) (0,0) (1,0)
(n-1)-TH

41
42

STATE (1,1) (0,1) (0,0) (1,0)
n-TH

41
42

STATE (1,1) (0,1) (0,0) (1,0)
(n+1)-TH

41
42

# FIG. 8

```
                    START

                      │
                      ▼              S10
        ┌──────────────────────────┐
        │     SET INITIAL VALUE     │
        └──────────────────────────┘
                      │
    ┌─────────────────┤
    │                 ▼              S11
    │      ╱──────────────────────╲
    │     ╱  IS TERM REPRESENTING   ╲    NO
    │     ╲ CONSTRAINT CONDITION ERASED? ╱──────────────┐
    │      ╲──────────────────────╱                     │
    │              │ YES                                 │
    │              ▼         S12                         ▼        S13
    │  ┌──────────────────────────┐       ┌──────────────────────────┐
    │  │ ERASE CONSTRAINT TERM PARAMETER │  │ SET CONSTRAINT TERM PARAMETER │
    │  └──────────────────────────┘       └──────────────────────────┘
    │              │                                     │
    │              ◄─────────────────────────────────────┘
    │              ▼              S14
    │  ┌──────────────────────────┐
    │  │  CALCULATE ENERGY FUNCTION │
    │  └──────────────────────────┘
    │              │
    │              ▼              S15
    │      ╱──────────────────────╲
    │     ╱      CONVERGENCE?       ╲    YES
    │     ╲──────────────────────╱──────────┐
    │              │ NO                       │
    │              ▼         S16              │
    │  ┌──────────────────────────┐          │
    └──│      BIT TRANSITION        │          │
       └──────────────────────────┘          │
                                  S17         │
        ┌──────────────────────────┐          │
        │   REACH OPTIMAL SOLUTION   │◄─────────┘
        └──────────────────────────┘
                      │
                      ▼
                    END
```

FIG. 9

TEMPORARY ERASING
OF ENERGY BARRIER

CONSTRAINED TUNNELING

t10   t11   t12   t13   t14   t15   t16   TIME

# FIG. 10

# FIG. 11

(A)

STATE (1,1) (0,1) (0,0) (1,0)
(n-1)-TH

STATE (1,1) (0,1) (0,0) (1,0)
n-TH

STATE (1,1) (0,1) (0,0) (1,0)
(n+1)-TH

(B)

STATE (1,1) (0,1) (0,0) (1,0)
(n-1)-TH

STATE (1,1) (0,1) (0,0) (1,0)
n-TH

STATE (1,1) (0,1) (0,0) (1,0)
(n+1)-TH

# FIG. 12

TEMPORARY ERASING
OF ENERGY BARRIER

62

CONSTRAINED TUNNELING

t20    t21    t22    t23    t24    t25    t26    TIME

# FIG. 13

```
          ┌─────────┐
          │  START  │
          └────┬────┘
               │ ─ S20
        ┌──────▼──────────┐
        │ SET INITIAL VALUE│
        └──────┬──────────┘
               │ ─ S21
   ┌──►┌──────▼──────────────┐
   │   │ CALCULATE ENERGY FUNCTION│
   │   └──────┬──────────────┘
   │          │ ─ S22
   │   ╱──────▼──────────────╲   YES
   │   ╲ DOES LOCAL SOLUTION REMAIN? ╲────►
   │   ╲──────┬──────────────╱
   │          │ NO  ─ S23
   │   ┌──────▼──────────┐
   └───┤  BIT TRANSITION │◄─────
       └─────────────────┘
```

S24
CONVERGENCE ENERGY VALUE = E1

S25
IS TERM REPRESENTING CONSTRAINT CONDITION ERASED?  NO

YES  S26
ERASE CONSTRAINT TERM PARAMETER

S27
SET CONSTRAINT TERM PARAMETER

S28
CALCULATE ENERGY FUNCTION

S29
IS NEW LOCAL SOLUTION IS REACHED?  YES

NO  S30
BIT TRANSITION

S31
CONVERGENCE ENERGY VALUE = E2

S32
E1=E2 ?  NO

YES  S33
REACH OPTIMAL SOLUTION

END

# FIG. 14

**COMBINATION OPTIMIZATION SYSTEM** — 20

**INFORMATION PROCESSING APPARATUS** — 250

CPU — 251
DRAM — 252
HDD — 253

COUPLING IF — 254

**COMBINATION OPTIMIZATION APPARATUS** — 200

COUPLING IF — 204

DRAM — 203
PROCESSOR — 201

SRAM — 202

# FIG. 15

200

**COMBINATION OPTIMIZATION APPARATUS**

203

**DRAM**

p1

W1 and b1 OF
CONSTRAINED
ENERGY FUNCTION

p2

W2 and b2 OF
UNCONSTRAINED
ENERGY FUNCTION

201

**PROCESSOR**

210

SEARCH CIRCUIT

220

CONTROL
CIRCUIT

230

REGISTER

202

**SRAM**

p0

W and b OF ENERGY
FUNCTION

# FIG. 16

Europäisches
Patentamt

European
Patent Office

Office européen
des brevets

# EUROPEAN SEARCH REPORT

**Application Number**

EP 20 17 8190

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOTARO TANAHASHI ET AL: "Application of Ising Machines and a Software Development for Ising Machines", JOURNAL OF THE PHYSICAL SOCIETY OF JAPAN., vol. 88, no. 6, 20 May 2019 (2019-05-20), page 061010, XP055749499, JP ISSN: 0031-9015, DOI: 10.7566/JPSJ.88.061010 * page 4 * | 1-10 | INV. G06F17/11 G06N5/00 G06Q10/04 |
| A | SANROKU TSUKAMOTO ET AL: "An Accelerator Architecture for Combinatorial Optimization Problems", FUJITSU SCIENTIFIC & TECHNICAL JOURNAL (FSTJ), vol. 53, no. 5, September 2017 (2017-09), pages 18-13, XP055673462, * the whole document * | 1-10 | |
| A | TOMAS VYSKOCIL ET AL: "Embedding Equality Constraints of Optimization Problems into a Quantum Annealer", ALGORITHMS, vol. 12, no. 4, November 2018 (2018-11), page 77, XP055759314, DOI: 10.3390/a12040077 * the whole document * | 1-10 | **TECHNICAL FIELDS SEARCHED (IPC)** G06F G06N G06Q |

-/--

The present search report has been drawn up for all claims

| Place of search | Date of completion of the search | Examiner |
|---|---|---|
| Berlin | 11 December 2020 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | Application Number EP 20 17 8190 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COUR BRIAN R LA ET AL: "Classical Simulated Annealing Using Quantum Analogues", JOURNAL OF STATISTICAL PHYSICS, PLENUM PUBL., NEW YORK, NY, US, vol. 164, no. 4, 29 June 2016 (2016-06-29) , pages 772-784, XP036014295, ISSN: 0022-4715, DOI: 10.1007/S10955-016-1570-4 [retrieved on 2016-06-29] * the whole document * ----- | 1-10 | |

TECHNICAL FIELDS SEARCHED (IPC)

The present search report has been drawn up for all claims

| Place of search | Date of completion of the search | Examiner |
|---|---|---|
| Berlin | 11 December 2020 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 786 815 A1**

**Patent documents cited in the description**

- JP 5120252 A

- JP 2004110831 A